Europäisches Patentamt

(19) European Patent Office

Office européen des brevets

(11) EP 0 986 901 B1

(12) EUROPEAN PATENT SPECIFICATION

(45) Date of publication and mention
of the grant of the patent:
**18.09.2002 Bulletin 2002/38**

(21) Application number: **98921699.9**

(22) Date of filing: **02.06.1998**

(51) Int Cl.$^7$: **H04N 5/445**

(86) International application number:
**PCT/IB98/00895**

(87) International publication number:
**WO 98/056188 (10.12.1998 Gazette 1998/49)**

(54) **DISPLAYING INTERNET CONTENT AND TELEVISION PROGRAMMING**

DARSTELLEN VON INTERNETINFORMATIONEN UND FERNSEHPROGRAMMEN

AFFICHAGE DE DONNEES INTERNET ET DE PROGRAMMATION TELEVISUELLE

(84) Designated Contracting States:
**AT BE CH DE DK ES FI FR GB GR IE IT LI LU MC NL PT SE**

(30) Priority: **02.06.1997 US 867264**
**02.06.1997 US 867266**
**02.06.1997 US 867279**
**02.06.1997 US 867543**
**02.06.1997 US 867613**

(43) Date of publication of application:
**22.03.2000 Bulletin 2000/12**

(60) Divisional application:
**01202162.2 / 1 143 731**

(73) Proprietor: **Sony Electronics Inc.**
**Park Ridge, New Jersey 07656 (US)**

(72) Inventors:
• **HSU, P., Robert**
**San Jose, CA 95118 (US)**
• **SONODA, Yumie**
**Los Altos, CA 94024 (US)**
• **NIIJIMA, Makoto, 154, Kamikomachi**
**Saitama 331 (JP)**
• **NAKANO, Hiroaki**
**San Francisco, CA 94109 (US)**
• **ROSIN, Robert**
**Franklin Lakes, NJ 07417 (US)**

(74) Representative: **Pratt, Richard Wilson et al**
**D. Young & Co,**
**21 New Fetter Lane**
**London EC4A 1DA (GB)**

(56) References cited:

WO-A-97/13368                US-A- 5 410 344
US-A- 5 485 197

• WITTIG H ET AL: "INTELLIGENT MEDIA AGENTS IN INTERACTIVE TELEVISION SYSTEMS" PROCEEDINGS OF THE INTERNATIONAL CONFERENCE ON MULTIMEDIA COMPUTING AND SYSTEMS,15 May 1995, pages 182-189, XP000603484
• "VERKNUEPFUNG VON TV MIT INTERNET" FUNKSCHAU, vol. 68, no. 18, 16 August 1996, page 70/71 XP000631189
• NYGREN K, JONSSON I-M, CARLVIK O: "An Agent System For Media On Demand Services" PAAM 96, PROCEEDINGS OF THE FIRST INTERNATIONAL CONFERENCE ON PRACTICAL APPLICATION OF INTELLIGENT AGENTS AND MULTI-AGENT TECHNOLOGY, 22 - 24 April 1996, pages 437-454, XP002086093
• CHEN H ET AL: "INTERNET CATEGORIZATION AND SEARCH: A SELF-ORGANIZING APPROACH" JOURNAL OF VISUAL COMMUNICATION AND IMAGE REPRESENTATION, vol. 7, no. 1, March 1996, pages 88-102, XP000619822
• "WebTV Networks Chooses Spyglass'SurfWatch Parental Contols" AVAILABLE FROM INTERNET,10 July 1996, XP002086094
http://www.spyglass.com/newsflash/releases /96/071096swwebtv.html
• QUINTANA Y: "KNOWLEDGE-BASED INFORMATION FILTERING OF FINANCIAL INFORMATION" PROCEEDINGS OF THE NATIONAL ONLINE MEETING,13 May 1997, pages 279-285, XP002057953

## Description

The present invention relates generally to a client and server system for presenting multimedia information and, more particularly, to an integrated internet on-demand system for television.

The internet is a collection of networks, including those maintained by commercial backbone providers such as MCI, PSINet, UUNET, and Sprint. The term "interact" applies to this entire set of interconnecting networks. Domain names, such as uspto.gov, are unique internet server addresses which function as the cyberspace addresses for organizations connected to the internet.

Interest in the internet has been increasing recently, especially in regard to e-mail and what has become known as the World Wide Web, which allows information on the internet to be presented through a graphical interface. The World Wide Web is a major client-server system, with millions of users, and is essentially a vast collection of interconnected documents.

Typically, on the internet, a larger computer is a server and a smaller computer is a client. A client can be a personal computer which is associated with the user. The client computer is connected to the internet via a modem connection, typically to a server at a point-of-presence (POP), the location of an access point to the internet. A client can use any of the servers, and often uses a series of them. The primary purpose of a server is to deliver a document on request to a client. The document may be text, an image file, or other type of file. The document is identified by a name called a Uniform Resource Locator ("URL") which typically includes the domain name of an organization. If the server is storing that particular URL, then the server delivers the document at that URL to the client in response.

Browsing software (i.e., web browsers) allow client users to request and display text and graphics, typically from a Hyper Text Markup Language ("html") document or web page identified by a URL on a web site server. When accessing web pages over the internet; a client user may reference an html document containing hypertext links to other documents, which may have URL addresses to different servers. When a link is selected, the browser is expected to fetch the new document and display it in place of the current one. In this manner, information from different internet servers can be linked together through documents containing such links. These links may be organized according to topics so that the links grouped under a particular topic relate to addresses for web pages which deal with related subject matter. For example, the U.S. House of Representatives' web server hosts html documents at URL address http://law.house.gov which contain links to a variety of other web pages generally relating to legal issues, including patent law. However, these links are presented to the user in a static manner, often with little guiding information.

Requesting web pages from servers using a client browser is commonly referred to colloquially as surfing the web. Although the use of animation, as well as audio and video, is becoming more common, the majority of web sites generally only present static graphical images. Even with data compression techniques, graphical files are notoriously large and slow to download given the limited bandwidth available over existing telephone modem connections. A web page having a large number of graphical images can take several minutes to retrieve. Audio and video files are typically very large, and can take even longer to completely download. This can result in long and frequent delays in retrieving and using such files.

However, the typical television viewer is accustomed to a near immediate response when selecting a channel or television station to watch. Although off-line browsing allows a client user to view pages already stored in cache memory from previously visited web sites, these documents are often not meaningfully organized, such as by topical subject matter for easy assimilation by the client user. Nor do these cached pages necessarily represent the most recent version of the pages available from the web site of interest.

Along with the increasing interest in the internet and the world wide web, appliances or set-top boxes similar to cable TV boxes have been developed in an attempt to allow access to the internet through the traditional television set. However, such attempts suffer from delays in accessing the graphics of the web, and the lack of experience in the mass-market with regard to the internet, especially in regard to finding and accessing relevant web pages of interest. Mass-market consumers are typically accustomed to having information broadcasted or delivered to them with minimal effort or delay.

The practice or technology of having information brought to a client user by an agent is sometimes referred to as push. Pushed information appears to have been initiated by the server rather than by the client or the user. However, in current systems, the information pushed from a server to a user often comes as the result of a programmed request from the client in the user's computer. Information pushers often require that the client download a program which often determines the useful data desired by the user and then occasionally initiates requests for information from the server. However, users may find such questionnaires to be burdensome, and may not completely and accurately complete the questionnaire.

Hence, there has been a long existing need for a system which is capable of navigating the internet efficiently so as to provide text, images, sound, and video on-demand in a simple, intuitive manner akin to traditional television programming for mass-market consumers. Illustrative embodiments of the invention described herein seek to fulfil these needs.

International Patent Application Publication No WO-A-9713368 discloses a system for providing television scheduling information and for enabling a viewer to link, search, select and interact with television schedule information on the internet. The television schedule information may be stored on the viewer's system, or may be downloaded to the viewer's system.

US patent No US-A-5 485 197 discloses a carousel display of interactive home information for interactive cable television services. It shows an interface with a plurality of faces establishing at least one available choice of text-based information services, and circuitry to cause apparent rotation of the carousel to display additional choices.

A system for delivering internet content to a television program is shown in "Verknüpfung von TV mit Internet", Funkschau, 18/96, p 70-71.

Respective aspects of the present invention are set forth in claims 1 and 97 hereof.

A better understanding of the invention will become apparent from the following illustrative description, taken in conjunction with the accompanying drawings, in which:

FIG. 1 is a block diagram illustrating a client-server system in accordance with the present invention;
FIG. 2 is a block diagram illustrating the client of the client-server system in accordance with the present invention;
FIG. 3 illustrates templates for categorizing web pages or links to web pages in accordance with the present invention;
FIG. 4 illustrates documents being sorted into topics from the templates in accordance with the claimed invention;
FIG. 5 illustrates an active frame for a graphical user interface in accordance with the present invention;
FIG. 6 is a flow chart illustrating the active frame for a graphical user interface in accordance with the present invention;
FIG. 7 illustrates another embodiment of the active frame for a graphical user interface in accordance with the present invention;
FIG. 8 illustrates a rotary menu wheel for a graphical user interface in accordance with the present invention;
FIG. 9 is a flow chart illustrating the rotary menu wheel for a graphical user interface in accordance with the present invention;
FIG. 10 is a flow chart illustrating the passive filtering for the client-server system in accordance with the present invention;
FIG. 11 is a block diagram illustrating the multiple data streams for the client-server system in accordance with the present invention; and
FIG. 12 is a flow chart illustrating the processing of multiple data streams by the client in accordance with the present invention.

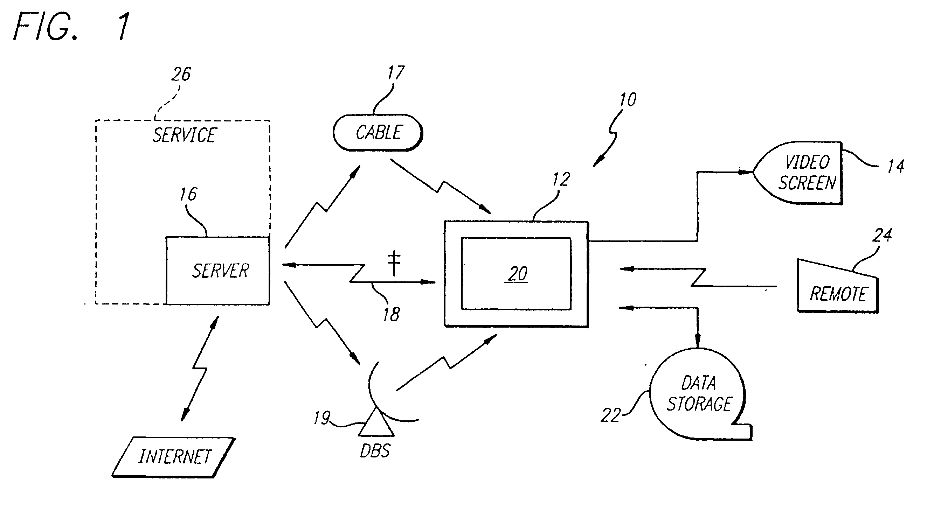

Referring now to the drawings, and in particular to FIGURE 1, there is shown a client-server system for presenting multimedia internet content and broadcast data and television programming on a television screen. The client 10 includes a set-top box 12 which is connected to or integrated within a television appliance 14. The set-top box 12 provides connections to video and computer data sources which are processed and displayed on the screen of the television appliance 14. The television appliance can include a cathode ray tube ("CRT"), liquid crystal display ("LCD"), or other device capable of presenting a video image. The client is preferably connected to the server 16 by a telephone modem 18.

The client further includes a processor 20 capable of performing multimedia tasks, programming for internet web browsing and controlling multimedia tasks, a digital data storage medium 22 such as a hard drive, digital video disk ("DVD") or digital video tape ("DVT"), and a remote control device 24 to allow the user convenient control of both internet and television functions through the set-top box. The remote control device 24 preferably includes numeric keys, channel-up (forward) and channel-down (back) buttons for selecting channels, directional controls for controlling movement, such as a cursor or menu selector, on the television screen, a button for activating a link or command, and dedicated keys for jumping to a home page or other specialized function. Alphanumeric or other text may be input using the remote control device or a separate keyboard. A method and apparatus for entering text using an input device having a small number of keys is disclosed in U. S. Patent No. 5,543,818 ("Scott"), and is hereby incorporated by reference.

The video connections to the client 10 can include cable 17 and digital broadcasting satellite ("DBS") 19. The video connections may be made to peripherals such as a VCR which would be connected to the set-top box. The computer data connections to the client can include telephone modems and ISDN connections, as well as digital satellite data services, and cable modems over the video connections to the client. It should be noted that the client can utilize several different types of data connections simultaneously. Computer data information may be multiplexed or otherwise embedded in a video signal source. A television receiver with a decoder for decoding coded data from a video signal is disclosed in U.S. Patent No. 5,512,954 ("Shintani"), which is hereby incorporated by reference. Both television and computer data can be provided to the client over the same digital satellite connection. For example, the client can utilize both a telephone modem and a digital satellite service, where the satellite service delivers to the client both traditional television programming, as well as internet content during the blanking signal of the television programming.

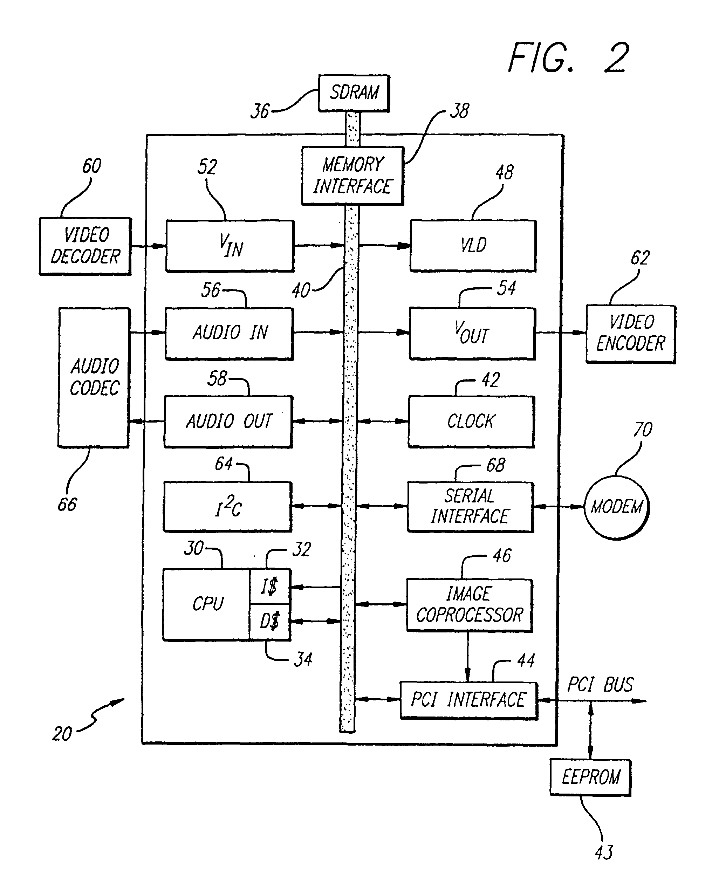

The processor 20 of the client is a multimedia processor which preferably includes a very long instruction word (VLIW) architecture. A suitable processor is known by the tradename "TM-1" which is manufactured by Philips Semiconductors - TriMedia Product Group, Sunnyvale, California. A block diagram of the processor 20 of the client 10 is illustrated in FIG. 2 by way of example. The processor includes a CPU 30 having an instruction cache 32, a data cache 34, and VLIW architecture which can run a real-time operating system (RTOS) kernel. To save bandwidth and storage space, the VLIW instructions can be compressed until needed. The processor includes an application library which can provide routines to establish a data connection with a server over a modem, enable web browsing, retrieve e-mail, encode and decode video data compressed using the MPEG1 standard, and decode MPEG2 files.

Synchronous DRAM (SDRAM) 36 is available through the memory interface 38 and data 43 containing a boot program for the processor can be connected to the processor through a PCI interface 44 to enable standalone operation of the processor.

A number of dedicated coprocessors are connected to the CPU through the data bus. An image coprocessor 46 is available to copy images from the SDRAM to a video frame buffer and perform scaling and color space conversions. A transfer rate of 50 megapixels per second (Mpix/Sec.) can be maintained by the image coprocessor. A variable-length decoder (VLD) coprocessor 48 is available to assist in decompressing MPEG1 and MPEG2 data streams.

Direct memory access (DMA) driven multimedia input/output (I/O) units which operate independently to process data are connected to the CPU 30. The video input unit 52, video output unit 54, audio input unit 56, and audio output unit 58 are DMA-driven I/O units. The video input unit 52 can accept video data from a video decoder 60 which converts a composite Y/C video signal into YUV 4:2:2 digital video data. The video output unit can provide data in YUV 4:2:2 video output format to a digital video encoder 62. Both the video input and video output units can follow the CCIR656 format. For example, the video output unit can drive other CCIR656-compatible devices such as a digital video tape recorder. An I$^2$C interface 64 can also be included. An audio code unit 66 having a 16-bit ADC and a 16-bit DAC for audio coding and decoding operations can be connected to the audio input and audio output units.

A synchronous serial interface 68 can be connected to a modem 70 for communicating with the server. The modem can be a V.34 modem capable of achieving a connection speed of 33.6 Kbps or greater over a standard telephone line or an ISDN modem interface. External circuitry to interface with incoming multimedia data streams can be connected to the processor as needed.

The server 16 is a computer with which the client preferably can establish a connection with over a telephone modem. The server functions as the client's access to the internet so that the client can request documents, files and other information from other servers connected to the internet. For purposes of discussion, this server, which is part of an on-line service 26 for the user, will also be referred to as the POP or network server. The service provider can package content to address the information needs and interests of a diverse consumer marketplace. Updates to the operating and applications software used by the processor of the client can be provided by the server as needed.

The server 16 can also provide a page with links or shortcuts to internet content to be displayed in the graphical user interface ("GUI") or front-end of the client. These pages are displayed as part of a selection of channels for both internet content and television programming. The links provided by the server are to web pages which preferably have already been screened by the internet service provider for quality and suitability. The links are classified into categories or topics within templates which can be stored on the server, the client, or both, to provide a framework for presenting these links through the interface of the client.

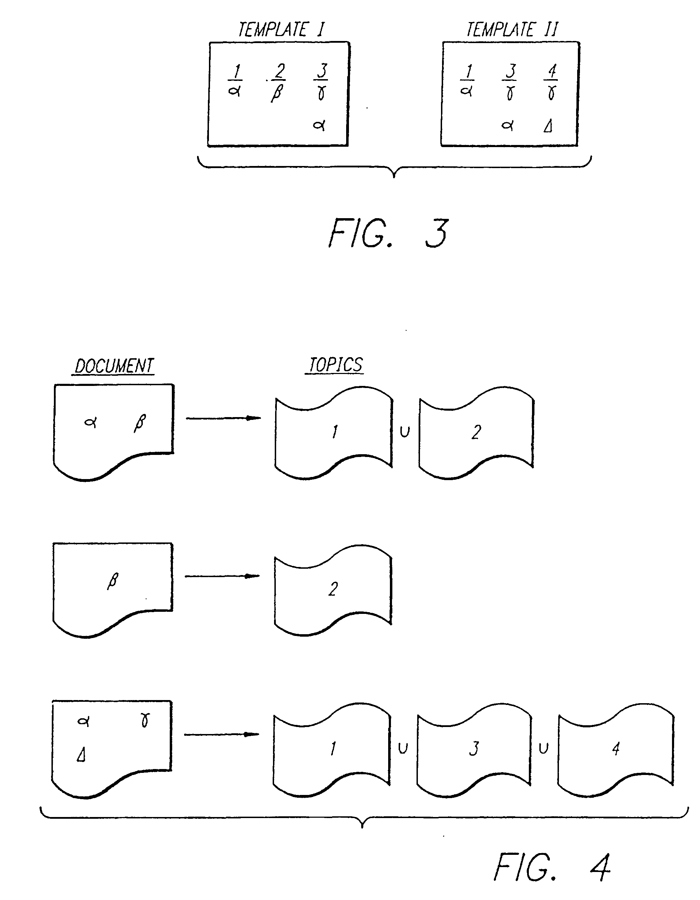

The templates can be stored either on the client or the sever, depending on the available storage space on the client. The templates can contain several different categories or topics from a given universe of topics. The same category or topic may be found in different overlapping templates. As illustrated in FIG. 3, template I and template II are separate templates in which topics 1 and 3 overlap. The topics associated with a template may be initially predetermined, and later adapted over time based on the past viewing and browsing interests of the user.

The subject matter of the topics or categories are defined by predefined identifying attributes so that each category can be defined by one or more of these attributes. These attributes can be associated with web pages in order to identify aspects of the subject matter or content of the page. As illustrated in FIG. 3, topic 1 is defined by the attribute $\alpha$, topic 2 is defined by the attribute $\beta$, topic 3 is defined by the attributes $\gamma$ and $\alpha$, and topic 4 is defined by $\gamma$ and $\Delta$. As an example, attribute $\alpha$ may identify the subject of "sports," attribute $\beta$ as "news," attribute $\gamma$ as "films," and attribute $\Delta$ as "science fiction." Topic 1 would then include web pages having the attribute $\alpha$ for sports attached linked to web pages relating to films concerning sports would include both the sports attribute $\alpha$ and the films attribute $\gamma$ and would be sorted or categorized as part of topic 3. Similarly, template I would include topics pertaining to sports, news, and sports films, while template II would include topics pertaining to news, sports films, and science fiction films, as defined by the relevant attributes.

The content of web pages may be described by one or more identifying attributes, and accordingly filtered into the categories or topics of the selected template. As illustrated in FIG. 4, a document having associated attributes $\alpha$ and $\beta$ would be put in topics 1 and 2, while a document having only attribute $\beta$ associated

therewith would only be classed as part of topic 2. As an example, a web page discussing "Rollerball," a science fiction film with a sports theme, would be classed as part of topics 1, 3 and 4 in both templates I and II. Prescreened web pages having been given identifying attributes can be classified according to those attributes and forced into the topics for the templates.

While the template and its associated topics may be predetermined, they can be later adapted automatically by an intelligent agent on either the client or the server based on the past viewing and browsing habits of the user. The client or server can record the attributes given for the web pages, and based on these recorded attributes, an algorithm may be used to modify the topics by adding attributes or altering the relationship of the attributes to one another using boolean ("AND, OR, NOT") logic. As an example, topic 1 of template I could be modified to exclude the science fiction attribute $\Delta$ so that the Rollerball web page would not be present in topic 1 of template I. Based on the recorded attributes, new topics can be generated for the templates, or a new template can be generated altogether.

The templates can be part of specific gateway interfaces tailored for specific user profiles. For example, the user may initially be required to select a general, preferably demographically-based, profile which may provide preselected web links in a predetermined set of categories. The particular graphical interface in which these links are presented to the user can also be selected based upon the experience level and the amount of interactivity desired by the user, which may also be automatically modified over time by an agent to fit the experience level of the user.

The templates are preferably used in an active and dynamic interface on the television screen to the user. This may be referred to as active frame scrolling. The template may form part of a guide page with links to different preselected and precategorized web pages of interest. The guide page may include html codes, and may be a front-end window separate from the browser. The guide page may be represented as a channel from a menu of channels to be selected by the user in addition to traditional television programming channels. As previously discussed in connection with the templates, the guide page may be automatically modified, adapted, and updated by either the client or the server, and be based at least in part on past viewing and browsing habits of the user.

The guide page may reside on the client, the server, or a combination of both. For example, the guide page may reside on the client, and be periodically updated by the server; or the template for the guide page may reside on the client while the content for the page is located on the POP server or another server identified by links in the guide page.

The guide page can include a set of topics, and a set of links associated with each topic. The links preferably include an associated object such as a graphic image to visually indicate the subject matter of the link. The guide page provides a dynamic interface in that it scrolls through the links in order to provide the client user with a revolving choice of links. The guide page further includes the objects associated with the scrolling links which may be displayed as a sideshow presentation to the user. Alternatively, the interface can present the guide page with the objects associated with the scrolling links as a filmstrip presentation to the user.

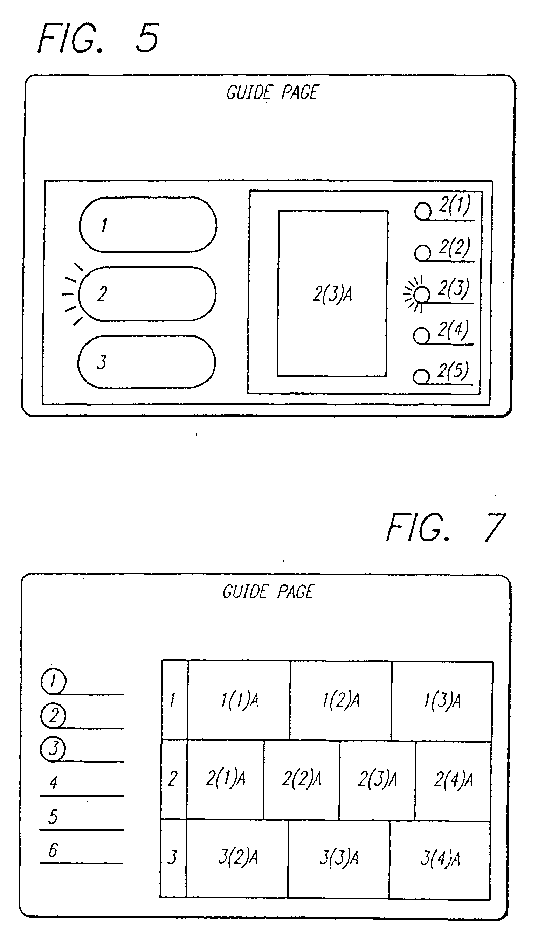

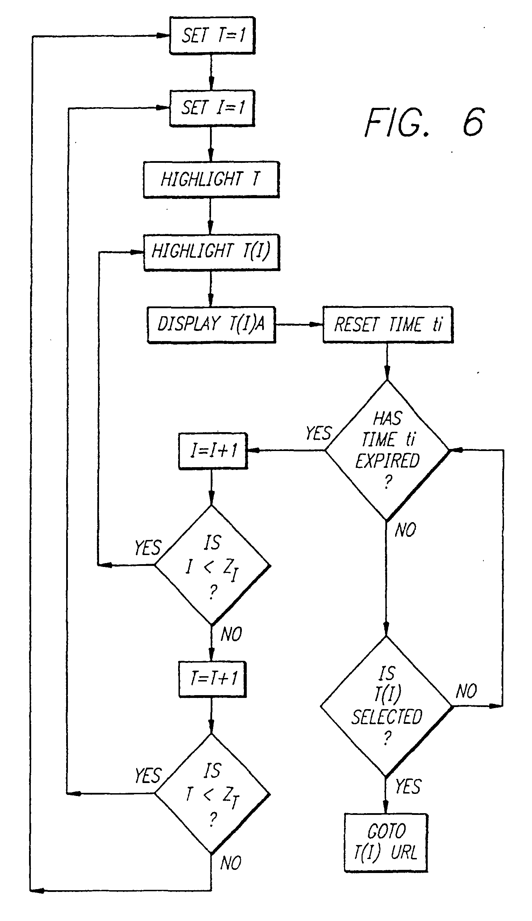

The selections of topics and links can be viewed as a series of sequences. For example, a first set of selected topics are displayed on the screen for the client user. One or a plurality of topics in a subset of the first set of topics is selectively highlighted in a first sequential order. For example, as illustrated in FIGS. 5 and 6, each succeeding displayed topic would be highlighted in descending order, and then the sequence would begin again at the top of the column of topics.

A second set of internet links associated with the highlighted topic are displayed while the first set of topics are being displayed. Each link preferably references a URL for a web document. The internet links of the second set are highlighted in a second sequential order. For example, as shown in FIG. 5, the highlighting of links would follow a descending order similar to that for the set of selected topics. When the second sequence of highlighting the links is completed, the next topic and then highlighted, and the links associated with the subject matter of that topic are highlighted in sequence. The next topic in the first sequential order is not highlighted until after the last. link in the second sequential order is highlighted. Alternately, the next topic is not highlighted until a preselected period of time passes, or until the user indicates that the system should proceed to the next topic, in order to allow the user adequate time to select a desired link.

The dynamic revolving sequence of displaying graphics and sounds associated with particular highlighted links which are part of a set of links associated with a particular topic can be thought of as a series of nested loops. FIG. 6 is a flow chart generally illustrating the active frame scrolling which dynamically presents the topics, links, and associated descriptive objects according to a classification structure defined by a template. Where T represents the topic, and I an internet link connected with a particular URL, both are initially set to a value of one. If topic T and associated internet link T(I) are highlighted, associated object T(I)A is displayed on the interface as well. Next, while waiting for a predetermined amount of time $t_i$ to expire, the client may accept the user's selection of associated link T(I) and retrieve the web page at the URL connected with that link. If time $t_i$ expires and there has been no selection by the user, then values T and I are incremented by one. First, internet link I is incremented and that next link can be highlighted, unless the value of I is greater than the number $Z_I$ of links associated with that topic T. In the latter situation, T is then incremented by one and that next topic is highlighted along with its associated links. If T is greater than the number $Z_T$ of topics for that template, then T is set back to one, and the scrolling sequence is started at the beginning. The order of these topics can of course be modified by the user at any time.

The user can select the highlighted link by depressing a selection or enter button on the remote control device while that link is highlighted. Alternately, the user can use the remote control to manipulate a cursor to select a link or topic which is not highlighted. When the highlighted link is selected by the user, the internet content, such as the page or document at the URL of the highlighted link, is delivered to the client and displayed on the television screen.

While a link is highlighted, an object, such as a graphic image, animation, sound file, or a combination thereof, associated with the highlighted link is displayed on the television screen. By scrolling through the selected topics of the first set, the links of the second set associated with each selected topic, and the objects associated with each link, as each are highlighted, a dynamic interface is presented to the client user.

For example, as illustrated in FIG. 5, topic "2" is highlighted, and the associated links 2(1), 2(2), 2(3), etc., are displayed in association with highlighted topic 2 for a predetermined amount of time. These links in turn are highlighted in sequence, and the object 2(3)A associated with highlighted link 2(3) is displayed in the interface for a short period of time.

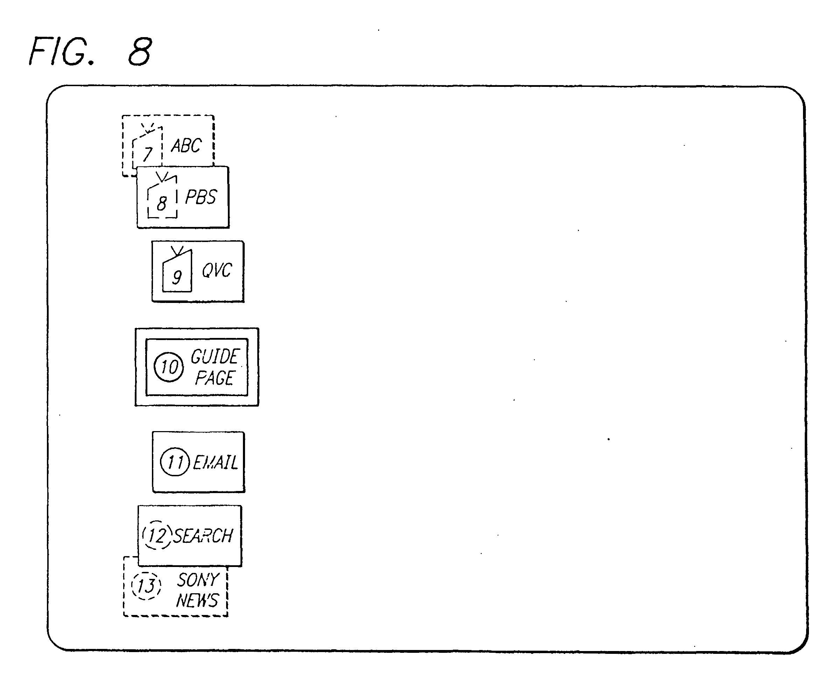

Alternately, as illustrated in FIG. 7, the interface can present the guide page with the objects associated with the links scrolling from right to left as a filmstrip presentation to the user. The associated links and objects for several topics and several links can be shown simultaneously. The links and associated objects are displayed to the user as a dynamic sideways moving slideshow. After pausing for a predetermined amount of time, one or more objects are moved out the frame at a time. Another set of topics and associated links and objects can be displayed in the interface after each of the previously displayed links has been shown in sequence. The associated objects can be displayed and scrolled in a horizontal sideways presentation, or in a vertically moving presentation.

The interface preferably displays the associated object while the second set of links are also being displayed. The object may be stored on the client, the POP server, or on the server containing the URL for the highlighted link. For example, the associated object may be downloaded from the server when the link is first highlighted, preferably over a high speed, large bandwidth data connection such as a digital satellite or cable modem connection. Alternatively, the associated objects or graphics may be downloaded periodically to the client and saved on the digital storage medium during off-peak hours in the early morning hours when usage is low in order to provide a fast dynamic interface to the user. Furthermore, the time required to establish a dial-up connection to the POP server can be reduced so as to be transparent to the user by initiating the connection when the user initially selects the guide page from a menu of channels. Documents or web pages which are part of frequently visited web sites can also be automatically updated and downloaded during off-peak hours in order to allow for fast off-line browsing. After a link is selected by the user, and while the previously downloaded and stored web page is being viewed by the user, the client can establish a connection with the POP server to follow any links present in the web page and download other related or linked web pages which the user may predictably find of interest.

The user may desire to switch quickly between internet content and television programming. An overlying menu of channels may be activated at any time on the screen to provide a single uniform interface to navigate among internet sites and television stations. Although television stations have traditionally presented as local channels, internet address have generally not been represented as such. The web channels would be different from television channels in that web channels would represent a location or URL on a particular server. A guide page having links to URLs or shortcuts to such links can also be a separate channel on the overlying menu, preferably is in the form of a rotary wheel menu.

As shown in FIG. 8, television stations and internet web pages can be presented as distinct channels on a single rotary wheel menu 80. The rotary wheel menu overlies the screen and allows the video or television programming to continue playing in the background, such as in the part of the display screen which is not occupied by the menu. This also applies to where the background is a web page so that animation and streaming video can continue to be updated. The user can directly select the next channel, whether internet or television based, to be visited using the menu. The client can continuously poll its I/O interface with the remote control device to detect user input or commands.

The rotary wheel menu 80 is presented as a series of panels 82 which appear to occupy a three dimensional space extending behind the television screen. The panels 82 on the front side of the rotary menu wheel 80 can be viewed on the television screen. The rotary menu wheel can include any number of panels, and displays a number of panels, such as five, seven or nine, which can remain legible on the front side of the menu wheel on the television screen. The remaining channels would not be displayed when rotated out of view to the back side of the wheel. Although the menu is described as a wheel for simplicity, the abstract geometric configuration of the menu need not be spherical. Although only a small fraction of the available number of panels may be visible in the interface at any one time, the menu wheel displayed can still simulate movement within a three-dimensional space when being rotated by causing the visible panels at the extreme top and bottom of the display screen appear faded and occupy a space behind another panel as the wheel is rotated.

The panels can include text and graphics to describe and symbolize channels for particular television stations, internet web pages, and e-mail. Channels are selected by rotating the wheel in order to move the desired panel into a highlighting selection box 84. The simulated wheel can be rotated to move the panels up and down by manipulating the remote control device, such as by depressing an "up channel" or "down channel" on the remote control device. An enter or select button on the remote control device can be used to select the desired channel highlighted in the selection box. The user can also view the channels immediately adjacent to the channel highlighted in the selection box.

The rotary menu wheel 80 resembles a Ferris wheel in certain respects in that the panels 82 remain facing the user even as the simulated wheel is being rotated. The text in the panels of the front half of the wheel facing the user maintains its dimensions and remains legible, even as the panels are rotated into different positions. The panels and accompanying text at the extreme top and bottom of the wheel begin to fade in order to further depict a three dimensional space occupied by the wheel. This is illustrated in FIG. 8 by the dashed lines for the panels at the upper and lower extremes of the rotary wheel menu.

Each panel is displayed according to its position on the wheel. For example, the vertical coordinate for any one panel to be displayed on the television screen would be:

$$y * \sin(t) + C_v,$$

where the vertical rotational radius y is set to 200, vertical coordinate constant $C_v$ is set to 250, and the angle t of that panel is relative to the center of the simulated wheel lying on the center horizontal axis of the screen. The values of y and $C_v$ are provided only to illustrate relative values which may be used to simulate vertical movement along a television screen. The above equation is applied when t is between $-\pi/2$ and $\pi/2$ radians so that cos(t) is positive, and defines the front face of the wheel which would be visible to the user. Where cos(t) is negative, that panel would occupy the back side of the wheel, and should not be visible. The highlighted selection box 84 should be located over the panel where t equals zero.

As the angular position of the panel approaches the zenith or the nadir of the wheel, the relative change in the vertical coordinates decreases as the sine curve levels off in approaching a value of one. The rate of vertical movement decreases so that the distance between adjacent panels decreases, and eventually overlap, towards the zenith and nadir of the simulated wheel. This causes the extreme panels displayed on the screen to appear to move behind the other displayed panels.

As the panel is moved to the zenith and nadir of the wheel, the panel becomes more transparent. This also has the effect of previewing more channels on the wheel than if the panel remained opaque. Using the equation, 100 * cos(t), to define the transparency of the panel, it is apparent that cos(t) approaches zero to render the panel transparent as the panel approaches the respective zenith and nadir of the circle defined by the wheel. This further enhances the facade that the extreme panels displayed on the screen are behind the other displayed panels.

In order to provide a more dimensional feel to the wheel, some horizontal movement can be introduced in addition to the vertical movement so that the wheel appears to slightly trail off the screen as the panels approach either the apex or nadir of the visible screen. As before, the horizontal coordinate for the panel displayed would be:

$$x * \cos(t) + C_H,$$

where the horizontal rotational radius x is set to 10, horizontal coordinate constant $C_H$ is set to 70, and t is the angle of the panel is relative to the center of the wheel and the center horizontal axis of the screen. The values of x and $C_H$ are provided only to illustrate relative values which may be used to simulate slight horizontal movement of a panel along a television screen as the panel is moved to the extreme top or bottom of the screen. The wheel is given an apparent curved quality by this slight horizontal movement of the panel as the panel moves vertically. As before, this equation applies only where cos(t) is positive. The highlighted selection box should be located over the panel where t equals zero, which should also represent the maximum horizontal coordinate for the panel. Again, where cos(t) is less than zero, the panel would be on the back side of the wheel, and should not be visible.

The user can edit the channel list for the menu wheel. The user can bookmark particular web pages or sites to appear as new channels in the menu wheel. Other channels may be added to the menu wheel for cable television channels, satellite channels, and other sources. Also, different menu wheels can be made available so that several different users can operate the system using different menu wheels with a personalized selection of channels.

The channels can be organized as a circular queue and any suitable data structure is used to keep track of the channels in the queue. The queue is initially preloaded with channels, and any arbitrary channel can be set to correspond to the channel which is to be highlighted in the selection box. Thereafter, the last visited channel can be stored so that when the user returns to the menu, the menu wheel and panel for the last viewed channel is displayed and highlighted. Several panels of the channels adjacent to the highlighted channel are displayed on the screen. The channel order is preferably maintained during rotation of the wheel, even when rotated out of view. For example, if there are fifty consecutively numbered channels, then channel twenty-six should always be approximately opposite channel one in the simulated wheel of the rotary menu.

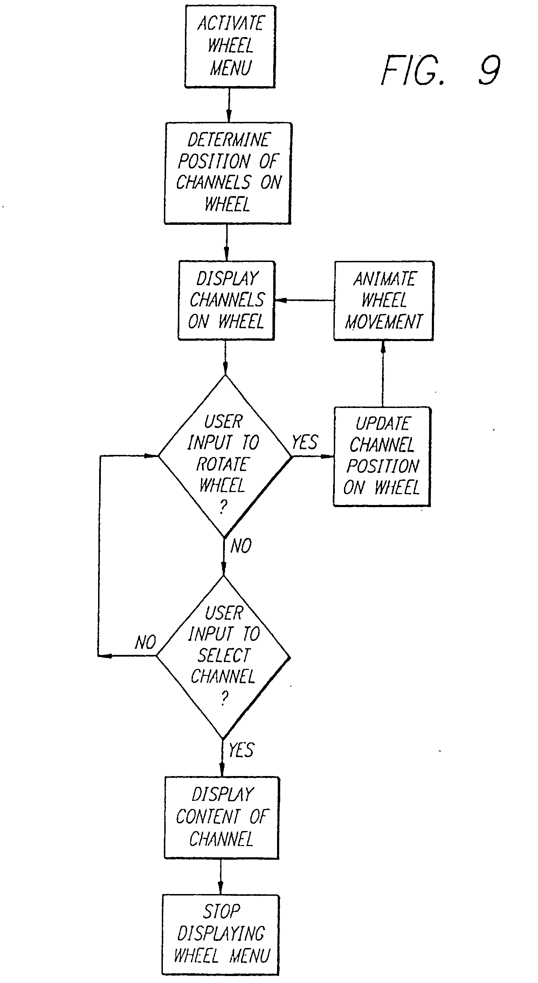

FIG. 9 is a flow chart illustrating a process for implementing the menu wheel for selecting channels of content. The user first activates the wheel menu, and the client determines the position of the channels on the simulated wheel relative to the screen. The channels which would be visible on the front part of the simulated wheel are displayed on the television screen.

If the user selects the command to rotate the menu wheel, the relative channel positions are updated, and the channels are moved vertically to animate the simulated movement of the wheel menu displayed on the television screen. A pointer can be used to track the position of a channel in the circular queue for the wheel. The pointer is updated, either by incrementing or decrementing the pointer in accordance with the user's commands. The movement of the menu wheel is then animated in accordance with the user's commands. As the animation of the menu wheel is completed, the panels are displayed in the new position according to the pointer location in order to smoothly animate the movement of the panels.

If the user has entered a command to select the channel of the highlighted panel, the pointer value is saved, the menu wheel is no longer displayed, and the content of the selected channel is displayed on the television screen. Another routine can be launched where the selection of the channel requires additional processing, whether web browsing or television signal decoding. For example, where a user selects the guide page, the menu wheel routine is exited and the routine for presenting the dynamic guide page is executed.

The remote control device can also select and scan between the channels representing the television broadcast and internet content through the "up channel" and "down channel" in the remote control device to move back and forth between channels, without first accessing the rotary wheel menu.

The rotary wheel menu is part of a comprehensive interface from which the user can easily access internet content and television programming. The active frame scrolling of the interface actively presents the user with a revolving array of easily understood and identifiable links to web pages containing internet content. The links are presented with associated graphics to represent the subject matter of the linked web page. In presenting a comprehensive interface to the user, that interface should be concise in order to avoid overloading the user with too much information which may not be relevant to the situation.

When accessing e-mail as opposed to browsing web pages, different commands are typically required. Further, when sending, reading, or retrieving e-mail, different commands are available for use. The same toolbar or menu interface is often used for these different e-mail situations, where the unnecessary or inappropriate commands are faded to indicate that they are unavailable to the user. This can lead to confusion by inexperienced users because these faded out commands are often still visible. In one embodiment of the system, a specific dedicated menu for each situation, such as browsing, sending e-mail, reading e-mail, or retrieving e-mail, is made available to the user.

For security of personal information, a password can be required before allowing access to personal e-mail or a web page containing personalized content. A series of graphical icons may be presented to the user, and the user selects a combination of these icons as a personal password.

The television can include hardware commonly referred to as the V-chip which restrict access to channels carrying programming which has been given a certain rating such as TV-14 or TV-M. Internet blocking software is often used as an add-on to browsing software to filter out or restrict access to certain content such as explicit sexual content which would be inappropriate for young children. The criteria used by specific internet blocking software programs can vary. For example, internet blocking software may automatically scan the text of a particular web site and search out for groups of words that would be associated with inappropriate topics, and those pages which use those words are restricted from access by the browser. Another example is a voluntary system developed by the Recreational Software Advisory Committee provides a rating based on the content of a web site and users can block sites with high ratings of undesirable or inappropriate content.

The present system uses a blocking filter which is compatible with one or more of the aforementioned internet blocking software systems and can convert or approximate ratings criteria used in the internet blocking software with that used to rate television programming. The user can set either the internet blocking software or the V-chip in the television to block both types of information or programming. For example, where the user sets the system to block programming with a television rating of TV-14, the browsing software will be modified by the client to block web sites on the internet having comparable content. The client will have a conversion capability to take the criteria used by the blocking software and compare it to predetermined set of criteria for the television rating system. Furthermore, the client can also function as the V-chip for television programming if one is not included in the television set.

A service can be provided through the server, where the server acts as a quality control gatekeeper that presents selected links to web pages. While the user is free to explore outside of the universe developed by the server, less experienced users can explore the more controlled environment provided by the server. The links to other web pages created and maintained by other internet entities and organizations will be preselected or accredited by the service for the quality of their content. After being initially set up, web sites are often not adequately maintained or updated. The staleness of a web site can be a factor in determining the quality of its content.

Unlike an on-line service which creates and provides its own specialized content, the server will provide links to content created by other entities on the internet, wherein those links will be categorized and organized according to the templates. The server, preferably the POP server, acts as the gateway to the linked web pages for the client. The links present in those templates for an individual user will be modified over time based on that user's pattern of usage and the subject matter of the user's browsing.

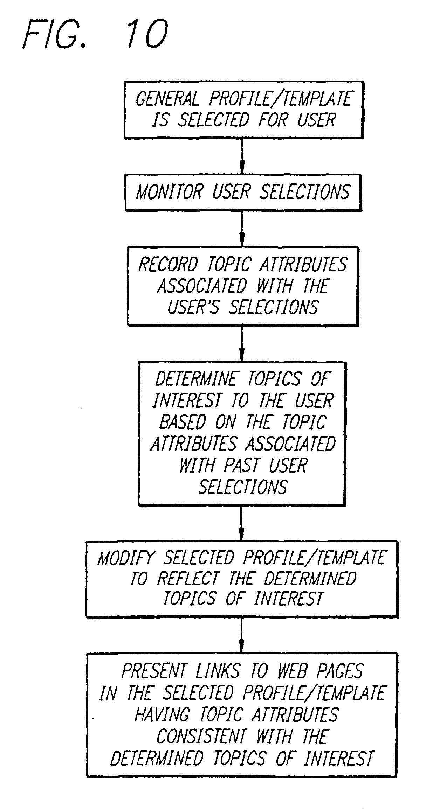

An intelligent agent on the POP server can monitor the identifying attributes of the preselected linked web pages provided by the server. The intelligent agent can be an anchored agent, and does not need to be a self-contained mobile agent carrying their own state information and moving from server to server. The agent will record the attributes of previously visited web sites from the guide page containing the links provided by the server. The intelligent agent can identify subject areas of interest for the user based on the past viewing and browsing habits of the client user in order to determine the user's preferences for the selected topics provided in the templates. However, the agent does not necessarily rate the quality of the content of the web pages. Instead, as illustrated by the flow chart in Fig. 10, the agent follows a macromanagement approach which presents categories of links according to topics within a template. The topics are defined by attributes which describe subject matter, and the attributes are associated with the linked web pages. The attributes can be attached to a web page link after being reviewed by the service running the POP server, or they can be voluntarily provided by the web site hosting the web page itself, or determined through an algorithm parsing the text of the web page.

Predetermined codes can be provided as part of data transmitted on a television signal to identify the genre of a television program being broadcasted. A television receiver which is capable of monitoring and storing the predetermined genre codes for television programming in order to select programs based on past viewing habits is disclosed in U.S. Patent No. 5,585,865 ("Amano, et al."), which is hereby incorporated by reference. These genre codes can be consistent with or convertible to the attributes associated with web pages in order to provide additional information to the agent to determine areas of interest for the client user. The client processor can store the genre codes associated with previously viewed television programming, and then provide this data to the agent to augment its web browsing data.

The web pages are classified into the categories or topics of the templates selected by the client user.

These attributes associated with the web pages identify aspects of the subject matter or content of the page. FIGS. 3 and 4 illustrate the relationship between the templates and the documents having associated attributes for classification into the topics of the templates. Prescreened web pages having been given identifying attributes can be classified according to those attributes and forced into the topics for the templates. As an example, attribute $\alpha$ may identify the subject of "sports," attribute $\beta$ as "news," and a document or web page having both attributes associated with it would be classed in both topics 1 and 2, and would be displayed as a link in either template I or II. As another example, a web page having attributes $\alpha$, $\Delta$ and $\gamma$ and would be classed as part of topics 1; 3 and 4 in both templates I and II.

While the template and its associated topics may be predetermined, and they can be later adapted automatically by the intelligent agent based on the past viewing and browsing habits of the user. The client or server can record the attributes given for the web pages, and based on these recorded attributes, an algorithm may be used to modify the topics by adding attributes or altering the relationship of the attributes to one another using boolean logic. As an example, topic 1 of template I could be modified to read as attribute $\alpha$ NOT attribute $\Delta$ so that the web page associated with attributes $\alpha$, $\Delta$ and $\gamma$ would not be present in topic 1 of template I. Based on the recorded attributes indicating the user's topical areas of interest, new topics can be modified or generated for the selected templates, or a new personalized template can be generated altogether upon request.

The agent preferably searches through a database of web links which have been compiled by the service to present to the user through the guide page in the graphical user interface. The agent can be focused on the web pages already screened, rated and categorized by the service. The links to web pages can be determined to be suitable by the service based on overall quality considerations, and given identifying attributes either manually or by a word parsing algorithm based on the occurrence of relevant words in the web page.

The guide page presented as part of the graphical user interface can be modified over time. The intelligent agent, located either on the client or server, is capable of automatically modifying, adapting, and updating the guide page based at least in part on past viewing and browsing habits of the user. The guide page is based on a template which organize and categorize the predetermined web links to the user. The filtering by the agent does not search out the entire content of the internet, but only that which has been preselected for inclusion with the templates for the user. Although the templates and associated topics may be initially selected by the user, the agent may modify the topics contained in the templates and filter the preselected contents accordingly for that template.

The agent provides additional links to web pages which have been classified in one or more of the topics set forth in the selected template for the guide page displayed to the client user. Thus, the guide page interface provides an active presentation to the user of the current links currently in the guide page, while updating and revising the links periodically to provide new and current links to the user so that template does not become stale.

In order to present the client user with a more coordinated and faster internet experience more akin to television viewing, the bandwidth capacity of the data connection between the client and server needs to be much greater than that currently available using analog modem connections over existing telephone lines. The bandwidth from all possible and available data connection sources should be utilized for maximum efficiency.

several different data connection sources may be available to the client, including telephone modems, ISDN lines, digital satellite data services, and cable modems. The client can utilize several different types of data connections simultaneously. Both television and computer data can be multiplexed and provided to the client over the same digital satellite connection. For example, the client can utilize both a telephone modem and a digital satellite service, where the satellite service provides both traditional television programming, as well as internet content in the blanking signal of the television programming or otherwise incorporated into the digital data stream. Content which is personalized could be received by the telephone line, while the satellite connection is used to receive information of broader appeal which is selectively received by a filtering mechanism in the client.

A digital satellite service separate from a DBS for television programming can download digital computer data at a rate of about 400 Kbps. However, such a service could be expensive, with additional connect fees based on each megabyte of data downloaded. However, by using an analog modem to download text which does not require a large bandwidth for rapid downloading, some download connect fees can be avoided. Text for other linked web pages can be downloaded over the modem connection while he user is reading or viewing another page containing the links. Either the client or the server can automatically initiate downloading at off-peak hours as previously discussed in order to efficiently use the available data connections to download data to the client for access by the user. The standard modem connection can also be used to download text and other data to update current links and associated objects or content while the user is on-line and browsing, but not actively downloading documents, so as to utilize the modem connection which would otherwise remain idle.

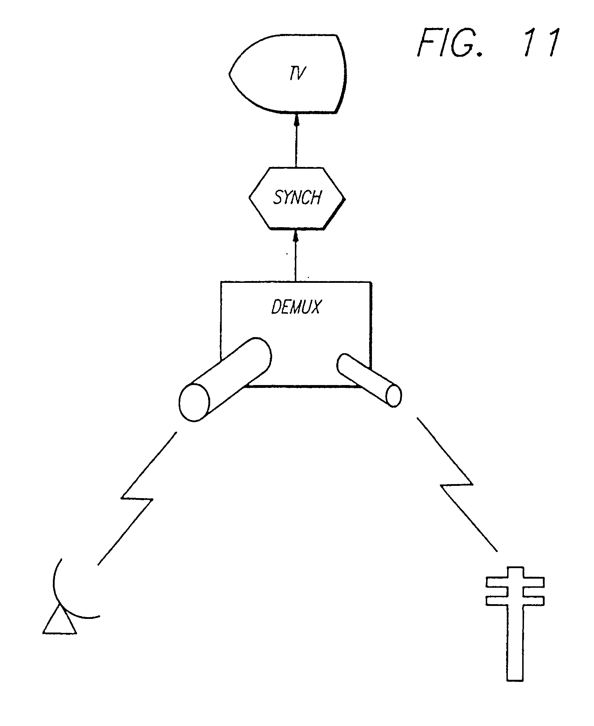

As shown in FIG. 11, the client is capable of demultiplexing data from both pipelines, where graphics, sound, and video files are preferably downloaded over the larger and faster pipeline having more bandwidth such as a digital satellite connection. Less bandwidth-demanding text and data files can be provided over the modem connection in order to efficiently use of all available bandwidth sources. Data files provided over the modem connection can be used to indicate which files are being transferred over which data connection, and to coordinate the presentation of the data being provided over the larger bandwidth. For example, different text, sound and animation files may be coordinated to produce a dynamic sideshow presentation to the user.

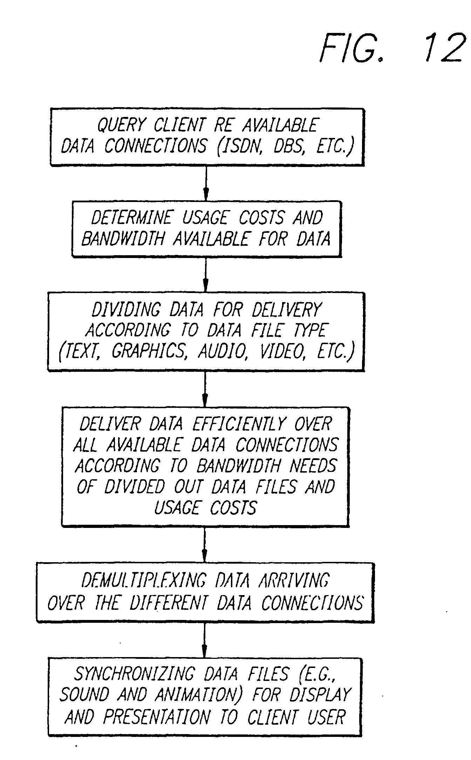

When establishing a remote data connection, the server and client initially perform a handshake to establish communication protocols. The server can further query the client regarding its available data stream connections, including telephone modems, cable modems, and digital satellite broadcasting, as illustrated in FIG. 12, in order to determine the most efficient delivery of different types of data through all of the available bandwidth connections. Different types of data files can be divided from one another and the data files delivered over the different data connection depending on the type of data file being transferred, the size of such files, and the bandwidth available for the different data connections. Data arriving over the different data connections are demultiplexed by the client. The efficient delivery of data allows the client to present text, graphics, video, audio and other multimedia information from a web page over the internet as a fast and coordinated presentation. A closer working relationship can also be developed as a result of the querying between the server and the client in order to develop a more efficient allocation of processing and storage burdens and responsibilities between the client and the server. Clients with limited storage capacity can utilize space on the server for certain functions.

Data is often compressed for more rapid delivery over the limited bandwidth currently available. Different types of data files, such as sound, video and graphics files, are often compressed at different rates and ratios, often using different compression schemes. For example, video data can be compressed using the MPEG1 or MPEG2 standards, audio data as wav, au or aiff files, and graphic images can be compressed using either the JPEG or GIF standards. Such data may be decompressed at different rates, and the client may include specific hardware or software, or a combination of both, to properly synchronize the decompression of data for a document or file for simultaneous and coordinated presentation to the user of, for example, different combinations of sound and animation files. Different selected sound and animation files can be mixed and matched, and used together for different occasions, and can be synchronized for a coordinated presentation to the client user.

From the foregoing it will be appreciated that the system of the present invention provides advantages in presenting information in a simple, intuitive manner, while making the most efficient use of the available bandwidth source connections. While several particular forms of the invention have been illustrated and described, it will be apparent that various modifications can be made without departing from the scope of the invention.

## Claims

1. A system for selectively displaying internet content and television programming on a display, the system comprising:

a client, including a display, and channels separately representing individual television content and individual internet content;

means for selecting between the channels and accessing the selected channel content, wherein when an individual television content channel or an individual internet content channel is selected the client presents the content associated with the respective channel on the display;

means for presenting on the display an internet gateway interface which selectively scrolls through links to selected web pages organized according to templates corresponding to web page content displayed on internet content channels comprising a dynamic interface including means for scrolling through selected topics of a first set, links of a second set associated with each selected topic, and objects associated with each link;

a server, including means for establishing a data connection with the client and downloading data along the data connection to the client; and

a menu for providing a single uniform interface to enable the user to navigate among the channels of internet sites and television stations, comprising a rotary wheel menu, wherein the rotary wheel menu comprises a series of panels which appear to occupy three-dimensional space including extending behind the display, wherein the panels on the front side of the rotary wheel menu can be viewed on the display and the distance between adjacent panels decreases and eventually overlaps towards the zenith and nadir of the rotary wheel, whereby the extreme panels displayed on the display appear to move behind other displayed panels.

2. A system according to claim 1, wherein the server includes means for passively filtering selected web pages for a user to explore based on the user's past usage of the client.

3. A system according to claim 2, wherein the filtering means modifies the links to selected topics present in the templates by monitoring the user's use of the client to determine the user's preferences for the selected topics in the templates.

4. A system according to claim 1, wherein the server includes means for querying the client regarding its available data connections to determine the most efficient delivery of different types of data through all available bandwidth connections.

5. A system as set forth in any preceding claim, wherein the client includes a video input, at least one data communication line, and a digital storage medium, the client is capable of displaying video from the video input and data from the digital storage medium on the display, the server is connected to the client by the communication line, the server being capable of communication with a plurality of other servers, wherein the server and the client can communicate with one another such that documents from the other servers can be provided to the client and stored on the digital storage device, and the server further includes a database categorizing a number of documents from the other servers into topics of interest according to pre-selected criteria.

6. A system as set forth in any preceding claim, wherein the client includes a set top box, connected to the display, for providing connections to video and computer data sources to be processed and displayed on the display.

7. A system as set forth in any preceding claim, wherein the display comprises a television screen.

8. A system as set forth in any preceding claim, wherein data connection between the client and server includes a telephone modem.

9. A system as set forth in any preceding claim, wherein the client further includes a processor for performing multimedia tasks, programming for the internet web, browsing, and controlling multimedia tasks.

10. A system as set forth in any preceding claim, wherein the client further includes a remote control device.

11. A system as set forth in any preceding claim, further comprising means for alphanumerically entering text.

12. A system as set forth in any preceding claim, wherein the data connection to the client comprises a satellite service for delivering television programming and for delivering internet content during the television programming blanking signal.

**13.** A system as set forth in any preceding claim, wherein the data connection comprises an ISDN connection.

**14.** A system as set forth in any preceding claim, wherein the data connection comprises a digital satellite data service.

**15.** A system as set forth in any preceding claim, wherein the data connection comprises a cable modem.

**16.** A system as set forth in any preceding claim, wherein the server comprises a network server for enabling the client to access the internet so that the client can request information from other servers connected to the internet.

**17.** A system as set forth in any preceding claim, wherein the client further comprises a graphical user interface, and the server includes means for providing the graphical user interface with a page with links to internet content.

**18.** A system as set forth in any preceding claim, wherein the internet channels represent a URL on a particular server.

**19.** A system as set forth in any preceding claim, wherein the templates categorize and organize the links.

**20.** A system as set forth in claim 1 or claim 2, further comprising a plurality of dedicated menus, each for a different command function including a plurality of different customized controls.

**21.** A system as set forth in any preceding claim, further comprising means for demultiplexing data to the client, which comprise means for downloading graphics, sound, or video files over a large bandwidth data connection.

**22.** A system as set forth in any preceding claim, further comprising means for synchronizing decompression of different types of data files for simultaneous and coordinated presentation to the user.

**23.** A system as set forth in claim 5, wherein the digital storage medium comprises a hard drive.

**24.** A system as set forth in claim 5, wherein the digital data storage medium comprises a digital video disk.

**25.** A system as set forth in claim 5, wherein the digital storage medium comprises a digital video tape.

**26.** A system as set forth in claim 7, wherein the television screen comprises a cathode ray tube.

**27.** A system as set forth in claim 7, wherein the television screen comprises a liquid crystal display.

**28.** A system as set forth in claim 10, wherein the remote control device includes numeric keys for selecting channels.

**29.** A system as set forth in claim 10, wherein the remote control device includes directional controls for controlling movement of selection means on the television screen.

**30.** A system as set forth in claim 10, wherein the remote control device includes a button for activating a link or command.

**31.** A system as set forth in claim 10, wherein the remote control device includes dedicated keys for jumping to a specialized function.

**32.** A system as set forth in claim 11, wherein the entering means comprise a keyboard.

**33.** A system as set forth in claim 12 or 21, wherein the video connection comprises a digital satellite broadcasting connection.

**34.** A system as set forth in claim 12 or 21, wherein the video connection comprises a cable connection.

**35.** A system as set forth in any preceding claim, wherein the templates include links classified into categories, which templates provide a framework for presenting the links in the client graphical user interface.

**36.** A system as set forth in claim 1, wherein the menu further includes a separate channel for a guide page having links to URLs.

**37.** A system as set forth in claim 1, wherein the menu overlies the screen, so as to enable video or television programming to continue in the background on the display.

**38.** A system as set forth in claim 19, further comprising means for modifying the links to selected topics present in the templates by monitoring the user's use of the client to determine the user's preferences for the selected topics in the templates.

**39.** A system as set forth in claim 20, wherein a dedicated menu function comprises web browsing.

**40.** A system as set forth in claim 20, wherein a dedicated menu function comprises sending E-Mail.

**41.** A system as set forth in claim 20, wherein a dedicated menu function comprises reading E-Mail.

**42.** A system as set forth in claim 20, wherein a dedicated . menu function comprises retrieving E-Mail.

**43.** A system as set forth in claim 35, wherein the templates are stored on the server.

**44.** A system as set forth in claim 35, wherein the templates are stored on the client.

**45.** A system as set forth in claim 35, wherein the templates are stored on the server and the client.

**46.** A system as set forth in claim 35, wherein the templates include a plurality of different categories, including web page content defined by predetermined identifying attributes identifying aspects of the subject matter of the web page content.

**47.** A system as set forth in claim 35, further comprising an active television screen user interface including the templates.

**48.** A system as set forth in claim 35, including a guide page comprising a template including links to different preselected pre categorized web pages of user interest.

**49.** A system as set forth in claim 1, further comprising means for rotating the rotary wheel menu to simulate movement within a three-dimensional space, causing the visible panels other than the forwardmost panel to be behind other panels as the wheel is rotated.

**50.** A system as set forth in claim 1, further comprising means for highlighting a selection box for a desired panel to rotate into.

**51.** A system as set forth in claim 1, 45, further comprising a remote control device, and means on the remote control device for enabling movement of the panels up and down.

**52.** A system as set forth in claim 1, wherein the rotary wheel menu resembles a Ferris Wheel, with the panels remaining facing the user as the wheel is rotated.

**53.** A system as set forth in claim 1, wherein the panel becomes more translucent as the panel moves to the zenith and nadir of the wheel.

**54.** A system as set forth in claim 48, wherein the guide page comprises a channel selectable by the user.

**55.** A system as set forth in claim 48, wherein the guide page is further adapted to be automatically modified.

**56.** A system as set forth in claim 48 or 55, wherein the guide page is stored on the server.

**57.** A system as set forth in claim 48 or 55, wherein the guide page is stored on the client.

**58.** A system as set forth in claim 48 or 55, wherein the guide page is stored on the client and the server.

**59.** A system as set forth in claim 48, 54, 55, 56, 57 or 58, wherein the guide page includes a set of topics, and a set of links associated with each topic.

**60.** A system system as set forth in claim 48, 54, 55, 56, 57 or 58, wherein the guide page comprises a dynamic interface for scrolling through links to provide the client user with a revolving choice of links.

**61.** A system as set forth in claim 51, further comprising means on the remote control device for selecting the desired channel, which is highlighted in the selection box.

**62.** A system as set forth in claim 55, wherein guide page adaptation is based in part on past user viewing habits.

**63.** A system as set forth in claim 59, wherein the links include an associated object for visually indicating the subject matter of the link.

**64.** A system as set forth in claim 59, wherein the guide page topics and links are selectable in a series of sequences.

**65.** A system as set forth in claim 59, further comprising a remote control device for selecting a link to deliver the internet content to the client for display on the television screen.

**66.** A system as set forth in claim 60, wherein the guide page further includes associated objects for the scrolling links.

**67.** A system as set forth in claim 63, wherein the associated objects are displayed as a slide show presentation to the user.

**68.** A system as set forth in claim 63, wherein the associated objects are displayed as a filmstrip presentation to the user.

**69.** A system as set forth in claim 64, wherein the series of sequences comprises a first set of selected topics displayed on the screen for the client user, and a subset of the first set of topics selectively highlighted in a first sequential order.

70. A system as set forth in claim 65, wherein the remote control device includes selection buttons for selecting a highlighted link.

71. A system as set forth in claim 65, wherein the remote control device includes a cursor for selecting a non-highlighted link.

72. A system as set forth in claim 66, further comprising means for actively scrolling through frames to dynamically present topics, links, and associated objects according to a template-defined classification structure.

73. A system as set forth in claim 67, wherein the slide show presentation comprises a dynamic sideways moving slide show of simultaneously shown links and associated objects for a plurality of topics.

74. A system as set forth in claim 64, 69 or 70, wherein each succeeding displayed topic is highlighted in descending order, and the sequence begins again at the first set of topics.

75. A system as set forth in claim 69, further comprising a second set of internet links associated with the first set of topics.

76. A system as set forth in claim 70, wherein upon highlighting a link, an object associated with the highlighted link is displayed on the television screen.

77. A system as set forth in claim 75, wherein the second set of internet links are highlighted in a second sequential order.

78. A system as set forth in claim 76, wherein the object comprises a graphic image.

79. A system as set forth in claim 76, wherein the object comprises an animation.

80. A system as set forth in claim 76, wherein the object comprises a sound file.

81. A system as set forth in claim 76, wherein the object is stored on the client.

82. A system as set forth in claim 76, wherein the object is stored on a network server.

83. A system as set forth in claim 76, wherein the object is stored on the server containing the URL for the highlighted link.

84. A system as set forth in claim 76, further comprising means for enabling downloading the associated object from the server when the link is first highlighted.

85. A system as set forth in claim 82, further comprising means for establishing a connection with the network server after a link is selected by the user and while the previously downloaded web page is being viewed, to follow links present in the web page and download other related web pages of user interest.

86. A system as set forth in claim 21 or 84, wherein the downloading enabling means comprise a high speed, large bandwidth data connection.

87. A system as set forth in claim 84, further comprising means for enabling downloading of the associated object periodically to the client, and saving thereof on the digital storage medium during off-peek low usage hours.

88. A system as set forth in claim 84, wherein the downloading enabling means further automatically updates web pages which are part of frequently visited web sites.

89. A system as set forth in claim 84, further comprising means for providing a substantially fast user interface to the user.

90. A system as set forth in claim 85, wherein the data connection comprises a digital satellite connection.

91. A system as set forth in claim 87, further comprising means for initiating a dial-up connection to the network server when the user initially selects the guide page.

92. A system as set forth in any one of claims 16,82 and 85, wherein the network server is a POP server.

93. A system according to claim 1, wherein the rotary wheel menu is adapted to rotate about a substantially horizontal axis.

94. A system according to claim 1, wherein the rotary wheel menu is adapted to be rotated substantially vertically.

95. A system according to claim 1, wherein the series of panels of the rotary wheel menu are adapted to appear to be suspended from the rotary wheel menu.

96. A system according to claim 1, wherein each of the series of panels visible in the display includes alphanumeric symbols thereon representing the channel accessible through selection of the panel, and wherein the alphanumeric symbols on each of the series of panels visible in the display are fully displayed and readable therein.

97. A method of selectively displaying internet content and television programming on a display, comprising:

establishing a connection between a client and a server for downloading data from the server along a data connection to the client;
displaying an internet gateway interface which actively scrolls through links to selected web pages organized according to templates corresponding to web page content displayed on internet content channels including scrolling through selected topics of a first set, links of a second set associated with each selected topic, and objects associated with each link, comprising displaying a rotary wheel menu comprising a series of panels which appear to occupy three-dimensional space including extending behind the display, wherein the panels on the front side of the rotary wheel menu can be viewed on the display and the distance between adjacent panels decreases and eventually overlap towards the zenith and nadir of the rotary wheel, and the extreme panels displayed on the display appear to move behind other displayed panels for providing a single uniform interface to enable the user to navigate among the channels of internet sites and television stations;
selecting between channels separately representing individual television content and individual internet content, in the client which includes a display, and
accessing the selected channel content;

wherein when an individual television content channel or an individual Internet content channel is selected the client presents the content associated with the selected channel on the display.

**Patentansprüche**

1. Vorrichtung zur ausgewählten Darstellung von Interneteinhalten und Fernsehprogrammen auf einem Display, mit:

einem Client mit einem Display und mit Kanälen, die getrennt individuellen Fernsehinhalt und individuellen Internetinhalt darstellen,
Mitteln zum Wählen zwischen den Kanälen und zum Zugreifen auf den ausgewählten Kanalinhalt, wobei der Client, wenn ein Kanal mit individuellem Fernsehinhalt oder ein Kanal mit individuellem Internetinhalt ausgewählt ist, den mit dem entsprechenden Kanal verbunden Inhalt auf dem Display darstellt,
Mitteln zum Darstellen einer Internet-Gatewayschnittstelle auf dem Display, die selektiv durch Links zu ausgewählten Webseiten blättert, die nach entsprechenden Bildschemas angeordnet sind, die dem Webseiteninhalt entsprechen, der auf Internet-Inhaltskanälen dargestellt ist, wobei diese eine dynamische Schnittstelle aufweist mit Mitteln zum Blättern durch einen ersten Satz ausgewählter Themen, einen zweiten Satz Links, die jedem der ausgewählten Themen zugehörig sind, und Objekten, die jedem Link zugehörig sind,
einem Server, mit Mitteln zum Einrichten einer Datenverbindung mit dem Client und zum Herunterladen von Daten über die Datenverbindung zu dem Client, und
einem Menü zum Bereitstellen einer einzigen einheitlichen Schnittstelle, um dem Nutzer ein Auswählen unter den Internetseitenkanälen und Fernsehstationskanälen zu ermöglichen, mit einem Drehradmenü, wobei das Drehradmenü eine Abfolge von Feldern aufweist, die scheinbar einen dreidimensionalen Raum einnehmen, der auch den sich hinter das Displayerstreckenden umfaßt, wobei die Flächen auf der Vorderseite des Drehradmenüs auf dem Display sichtbar sind und der Abstand zwischen angrenzenden Flächen abnimmt und diese gegebenenfalls überlappen zu Zenit und Fußpunkt des Drehrades hin, wobei die äußeren auf dem Display dargestellten Flächen sich scheinbar hinter die anderen dargestellten Flächen bewegen.

2. Vorrichtung nach Anspruch 1,
**wobei** der Server Mittel zur passiven Filterung bestimmter Webseiten aufweist, die für einen Nutzer bereitgestellt werden, basierend auf der vorigen Nutzung des Clients durch den Nutzer.

3. Vorrichtung nach Anspruch 2,
**wobei** die Filtermittel die Links zu ausgewählten, in den Bildschemas dargestellten Punkten verändern, indem sie die Nutzung des Client durch den Nutzer überwachen, um die Vorlieben des Nutzers für die ausgewählten Punkte in den Bildschemas zu bestimmen.

4. Vorrichtung nach Anspruch 1,
**wobei** der Server Mittel zur Abfrage des Client in Bezug auf dessen verfügbare Datenverbindungen aufweist, um die effizienteste Zuführung verschiedener Datentypen über die Verbindungen der gesamten verfügbaren Bandbreite zu bestimmen.

5. Vorrichtung gemäß einem der vorhergehenden Ansprüche,
**wobei** der Client einen Videoeingang aufweist, wenigstens eine Datenverbindungsleitung und ein digitales Speichermedium, wobei der Client auf dem Display Video von dem Videoeingang und Daten aus dem digitalen Speichermedium darstellen kann, der Server mit dem Client über die Verbindungsleitung verbunden ist, der Server mit einer Mehrzahl von anderen Servern kommunizieren kann, wobei der Server und der Client miteinander kommunizieren können, so daß Dokumente von den anderen Servern an den Client weitergegeben werden und in der digitalen Speichervorrichtung gespeichert werden, und der Server weiter eine Datenbank aufweist, die eine Anzahl Dokumente von den anderen Servern nach vorbestimmten Kriterien nach Interessensthemen einordnet.

6. Vorrichtung gemäß einem der vorhergehenden Ansprüche,
**wobei** der Client einen Vorrichtungsgehäuseaufsatz aufweist, der mit dem Display verbunden ist und Verbindungen zu Video- oder Computerdaten bereitstellt, die verarbeitet und auf dem Display dargestellt werden.

7. Vorrichtung gemäß einem der vorhergehenden Ansprüche,
**wobei** das Display einen Fernsehbildschirm aufweist.

8. Vorrichtung gemäß einem der vorhergehenden Ansprüche,
**wobei** die Datenverbindung zwischen dem Client und dem Server ein Telephonmodem aufweist.

9. Vorrichtung gemäß einem der vorhergehenden Ansprüche,
**wobei** der Client einen Prozessor aufweist zur Durchführung der Multimedia-Aufgaben, zur Programmierung für das Internet-Netz, zum Web-Browsen und zum Steuern von Multimediaufgaben.

10. Vorrichtung gemäß einem der vorhergehenden Ansprüche,
**wobei** der Client eine Fernsteuervorrichtung aufweist.

11. Vorrichtung gemäß einem der vorhergehenden Ansprüche,
mit Mitteln zur alphanumerischen Texteingabe.

12. Vorrichtung gemäß einem der vorhergehenden Ansprüche,
**wobei** die Datenverbindung zu dem Client einen Satellitendienst zur Übertragung von Fernsehprogrammen und zur Übertragung von Internetinhalten während des **Fernsehprogramm-Austastlückensignal umfaßt**.

13. Vorrichtung gemäß einem der vorhergehenden Ansprüche,
**wobei** die Datenverbindung eine ISDN Verbindung umfaßt.

14. Vorrichtung gemäß einem der vorhergehenden Ansprüche,
**wobei** die Datenverbindung einen digitalen Satellitendatendienst umfaßt.

15. Vorrichtung gemäß einem der vorhergehenden Ansprüche,
**wobei** die Datenverbindung ein Kabelmodem umfaßt.

16. Vorrichtung gemäß einem der vorhergehenden Ansprüche,
**wobei** der Server einen Netzwerkserver umfaßt, der dem Client einen Zugang zum Internet gewährt, so daß der Client Informationen von anderen, mit dem Internet verbundenen Servern anfordern kann.

17. Vorrichtung gemäß einem der vorhergehenden Ansprüche,
**wobei** der Client eine graphische Benutzerschnittstelle aufweist und der Server Mittel aufweist, die die graphische Benutzerschnittstelle mit einer Seite mit Links auf Internetinhalte versorgen.

18. Vorrichtung gemäß einem der vorhergehenden Ansprüche,
**wobei** die Internetkanäle eine URL auf einem bestimmten Server darstellen.

19. Vorrichtung gemäß einem der vorhergehenden Ansprüche,
**wobei** die Bildschemas die Links kategorisieren und ordnen.

20. Vorrichtung gemäß Anspruch 1 oder 2,
mit einer Mehrzahl abhängiger Menüs, jedes für eine andere Kommandofunktion mit einer Mehrzahl unterschiedlicher, individueller Steuerungen.

21. Vorrichtung gemäß einem der vorhergehenden Ansprüche,
mit Mitteln zum Demultiplexen von Daten an den Cient, der Mittel aufweist, zum Herunterladen von Graphik-, Ton- oder Videodateien über eine Breitbanddatenverbindung.

22. Vorrichtung gemäß einem der vorhergehenden Ansprüche,

mit Mitteln zur Synchronisierung des Dekomprimierens verschiedener Arten von Datendateien, um diese gleichzeitig und koordiniert dem Nutzer zu präsentieren.

23. Vorrichtung gemäß Anspruch 5,
**wobei** das digitale Speichermedium eine Festplatte umfaßt.

24. Vorrichtung gemäß Anspruch 5,
**wobei** das digitale Speichermedium eine **Digital-Video-Platte umfaßt**.

25. Vorrichtung gemäß Anspruch 10,
**wobei** das digitale Speichermedium ein **Digital-Videoband umfaßt**.

26. Vorrichtung gemäß Anspruch 7,
**wobei** der Fernsehbildschirm eine Kathodenstrahlröhre umfaßt.

27. Vorrichtung gemäß Anspruch 7,
**wobei** der Fernsehbildschirm ein Flüssigkristall-Display umfaßt.

28. Vorrichtung gemäß Anspruch 10,
**wobei** die Fernbedienungsvorrichtung Zahlentasten für die Kanalwahl aufweist.

29. Vorrichtung gemäß Anspruch 10,
**wobei** die Fernbedienungsvorrichtung Richtungssteuerungen zur Steuerung der Bewegung der Auswahlmittel auf dem Fernsehbildschirm umfaßt.

30. Vorrichtung gemäß Anspruch 10,
**wobei** die Fernbedienungsvorrichtung eine Taste zur Betätigung eines Links oder Kommandos umfaßt.

31. Vorrichtung gemäß Anspruch 10,
**wobei** die Fernbedienungsvorrichtung festgelegte Tasten für Sprünge auf spezielle Funktionen umfaßt.

32. Vorrichtung gemäß Anspruch 11,
**wobei** die Zugangsmittel eine Tastatur aufweisen.

33. Vorrichtung gemäß Anspruch 12 oder 21,
**wobei** die Videoverbindung eine digitale Satellitenübertragungsverbindung umfaßt.

34. Vorrichtung gemäß Anspruch 12 oder 21,
**wobei** die Videoverbindung einen Kabelanschluß aufweist.

35. Vorrichtung gemäß einem der vorhergehenden Ansprüche,

**wobei** die Bildschemas Links umfassen, die in Kategorien eingeteilt sind, wobei die Bildschemas ein Gerüst zur Präsentation der Links in der graphischen Benutzerschnittstelle des Client anbieten.

36. Vorrichtung gemäß Anspruch 1,
**wobei** das Menü einen getrennten Kanal für eine Leitseite mit Links auf URL's aufweist.

37. Vorrichtung gemäß Anspruch 1,
**wobei** das Menü den Bildschirm überdeckt, so daß Video- oder Fernsehprogramme im Hintergrund des Displays fortlaufen.

38. Vorrichtung gemäß Anspruch 19,
mit Mitteln zur Veränderung der Links auf ausgewählte, in den Bildschemas dargestellte Themen, mittels Überwachen der Nutzung des Client durch den Nutzer, um die Vorlieben des Nutzers für die ausgewählten Themen in den Bildschemas zu bestimmen.

39. Vorrichtung gemäß Anspruch 20,
**wobei** eine bestimmte Menüfunktion Web-Browsen umfaßt.

40. Vorrichtung gemäß Anspruch 20,
**wobei** eine bestimmte Menüfunktion E-mails-senden umfaßt.

41. Vorrichtung gemäß Anspruch 20,
**wobei** eine bestimmte Menüfunktion E-mails-lesen umfaßt.

42. Vorrichtung gemäß Anspruch 20,
**wobei** eine bestimmte Menüfunktion E-mails-empfangen umfaßt.

43. Vorrichtung gemäß Anspruch 35,
**wobei** die Bildschemas in dem Server gespeichert sind.

44. Vorrichtung gemäß Anspruch 35,
**wobei** die Bildschemas in dem Client gespeichert sind.

45. Vorrichtung gemäß Anspruch 35,
**wobei** die Bildschemas in dem Server und dem Client gespeichert sind.

46. Vorrichtung gemäß Anspruch 35,
**wobei** die Bildschemas eine Mehrzahl an unterschiedlichen Kategorien umfassen, einschließlich Webseiteninhalte, die durch festgelegte Identifizierungsmerkmale bestimmt werden, die Eigenschaften des Gegenstandes des Webseiteninhalts kennzeichnen.

**47.** Vorrichtung gemäß Anspruch 35, mit einer aktiven Fernsehbildschirm-Benutzerschnittstelle, die die Bildschemas einschließt.

**48.** Vorrichtung gemäß Anspruch 35, mit einer Leitseite, die ein Bildschema aufweist, das Links zu verschiedenen vorausgewählten, vorkategorisierten Webseiten umfaßt, die für den Nutzer von Interesse sind.

**49.** Vorrichtung gemäß Anspruch 1, mit Mitteln zum Drehen des Drehradmenüs, um eine Bewegung in einem dreidimensionalen Raum darzustellen, die die sichtbaren Flächen anders als die vorderste Fläche hinter andere Flächen bewegt, sobald das Rad gedreht wird..

**50.** Vorrichtung gemäß Anspruch 1, mit Mitteln zur Hervorhebung einer Auswahlbox für eine gewünschte Fläche, um zu dieser zu drehen..

**51.** Vorrichtung gemäß Anspruch 1, *(streiche 45)* mit einer Fernbedienungsvorrichtung und Mitteln auf der Fernbedienungsvorrichtung, um eine Bewegung der Flächen aufwärts und abwärts zu bewirken.

**52.** Vorrichtung nach Anspruch 1, **wobei** das Drehradmenü einem Riesenrad ähnelt, wobei die Flächen dem Nutzer zugewandt bleiben, wenn das Rad gedreht wird.

**53.** Vorrichtung nach Anspruch 1, **wobei** die Fläche mehr durchscheinend wird, sobald die Fläche sich zu dem Zenit oder Fußpunkt des Rades bewegt.

**54.** Vorrichtung nach Anspruch 48, **wobei** die Leitseite einen durch den Nutzer auswählbaren Kanal aufweist.

**55.** Vorrichtung nach Anspruch 48, **wobei** die Leitseite so eingerichtet ist, daß sie automatisch verändert werden kann.

**56.** Vorrichtung gemäß Anspruch 48, **wobei** die Leitseite in dem Server **gespeichert ist**.

**57.** Vorrichtung gemäß Anspruch 48, **wobei** die Leitseite in dem Client **gespeichert ist**.

**58.** Vorrichtung gemäß Anspruch 48, **wobei** die Leitseite in dem Server und dem Client **gespeichert ist**.

**59.** Vorrichtung gemäß Anspruch 48,54,55,56,57 oder 58, **wobei** die Leitseite eine Themenzusammenstellung und eine Zusammenstellung von jedem Thema zugehörigen Links umfaßt.

**60.** Vorrichtung gemäß Anspruch 48,54,55,56,57 oder 58, **wobei** die Leitseite eine dynamische Schnittstelle zum Rollen durch die Links aufweist, um dem Nutzer des Clients eine Drehauswahl **von Links anzubieten**

**61.** Vorrichtung gemäß Anspruch 51, mit Mitteln auf der Fernbedienungsvorrichtung zur Auswahl des gewünschten Kanals, der in der Auswahlbox hervorgehoben ist.

**62.** Vorrichtung gemäß Anspruch 55, **wobei** die Anpassung der Leitseite zum. Teil auf den vorherigen Sehgewohnheiten des Nutzers basiert.

**63.** Vorrichtung gemäß Anspruch 59, **wobei** die Links ein verbundenes Objekt zum visuellen Anzeigen des Gegenstandes des Links einschließen.

**64.** Vorrichtung gemäß Anspruch 59, **wobei** die Themen und Links der Leitseite in einer Serie von Abfolgen auswählbar sind.

**65.** Vorrichtung gemäß Anspruch 59, mit einer Fernbedienungsvorrichtung zum Auswählen eines Links, dessen Internetinhalt an den Client gesandt wird, um ihn auf dem Fernsehschirm darzustellen.

**66.** Vorrichtung gemäß Anspruch 60, **wobei** die Leitseite verbundene Objekte zu den Roll-Links aufweist.

**67.** Vorrichtung gemäß Anspruch 63, **wobei** die verbundenen Objekte als eine Durchlaufbildvorführung dem Nutzer dargestellt werden.

**68.** Vorrichtung gemäß Anspruch 63, **wobei** die verbundenen Objekte als eine Filmstreifenvorführung dem Nutzer dargestellt werden

**69.** Vorrichtung gemäß Anspruch 64, **wobei** die Serie von Abfolgen einen ersten Satz von ausgewählten Themen umfaßt, der für den Client-Nutzer auf dem Bildschirm dargestellt wird, und einen Unter-Satz aus dem ersten Satz von Themen, der selektiv in einer ersten geordneten Abfolge hervorgehoben wird.

**70.** Vorrichtung gemäß Anspruch 65, **wobei** die Fernbedienungsvorrichtung Auswahltasten zur Auswahl eines hervorgehobenen Links aufweist.

71. Vorrichtung gemäß Anspruch 65,
**wobei** die Fernbedienungsvorrichtung einen Zeiger zur Auswahl eines nicht hervorgehobenen Links aufweist

72. Vorrichtung gemäß Anspruch 66,
mit Mitteln zum aktiven Blättern durch Rahmen, um dynamisch Themen, Links und zugehörige Objekte entsprechend einer Schema-definierten Einordnungsstruktur darzustellen.

73. Vorrichtung gemäß Anspruch 67,
**wobei** die Durchlaufbildvorführung eine dynamische, seitliche und sich bewegende Durchlaufdarstellung von gleichzeitig gezeigten Links und zugehörigen Objekten zu einer Mehrzahl von Themen aufweist.

74. Vorrichtung gemäß Anspruch 64,69 oder 70,
**wobei** jedes aufeinanderfolgend dargestellte Thema in absteigender Folge hervorgehoben ist und die Abfolge erneut mit dem ersten Satz an Themen beginnt.

75. Vorrichtung gemäß Anspruch 69,
mit einem zweiten Satz an Internet-Links zugehörig zu dem ersten Satz an Themen.

76. Vorrichtung gemäß Anspruch 70,
**wobei** mit dem Hervorheben eines Links ein zu dem hervorgehobenen Link zugehöriges Objekt auf dem Fernsehbildschirm dargestellt wird.

77. Vorrichtung gemäß Anspruch 75,
**wobei** der zweite Satz von Internet-Links in einer zweiten geordneten Abfolge hervorgehoben wird.

78. Vorrichtung gemäß Anspruch 76,
**wobei** das Objekt ein graphisches Bild aufweist.

79. Vorrichtung gemäß Anspruch 76,
**wobei** das Objekt eine Animation aufweist.

80. Vorrichtung gemäß Anspruch 76,
**wobei** das Objekt eine Tondatei aufweist.

81. Vorrichtung gemäß Anspruch 76,
**wobei** das Objekt auf dem Client gespeichert ist.

82. Vorrichtung gemäß Anspruch 76,
**wobei** das Objekt auf einem Netzwerkserver gespeichert ist.

83. Vorrichtung gemäß Anspruch 76,
**wobei** das Objekt auf dem Server gespeichert ist, der die URL für den hervorgehobenen Link enthält.

84. Vorrichtung gemäß Anspruch 76,
mit Mitteln, die ein Herunterladen des zugehörigen Objekts von dem Server beginnen, wenn der Link erstmalig hervorgehoben wird.

85. Vorrichtung gemäß Anspruch 82,
mit Mitteln zum Einrichten einer Verbindung mit dem Netzwerkserver, nachdem ein Link durch den Nutzer ausgewählt wurde und während die zuvor heruntergeladene Web-Seite betrachtet wird, um den auf der Web-Seite vorhandenen Links zu folgen und andere zugehörige, für den Nutzer interessante Web-Seiten herunterzuladen.

86. Vorrichtung gemäß Anspruch 21 oder 84,
**wobei** die das Herunterladen ermöglichenden Mittel eine Hochgeschwindigkeitsdatenverbindung großer Bandbreite umfassen.

87. Vorrichtung gemäß Anspruch 84,
mit Mitteln, die ein periodisches Herunterladen des zugehörigen Objekts auf den Client und dortiges Abspeichern auf das digitale Speichermedium außerhalb der **Direktlese-Zeiten in solchen geringer Nutzung ermöglichen**.

88. Vorrichtung gemäß Anspruch 84,
**wobei** die das Herunterladen ermöglichenden Mittel Web-Seiten automatisch updaten, die Teil von regelmäßig besuchten Web-Seiten sind.

89. Vorrichtung gemäß Anspruch 84,
mit Mitteln zur Einrichtung einer tatsächlich schnellen Nutzerschnittstelle für den Nutzer.

90. Vorrichtung gemäß Anspruch 85,
**wobei** die Datenverbindung eine digitale Satellitenverbindung umfaßt.

91. Vorrichtung gemäß Anspruch 87,
mit Mitteln zum Start einer Einwählverbindung zu dem Netzwerkserver, wenn der Nutzer am Anfang die Leitseite wählt.

92. Vorrichtung gemäß irgendeinem der Ansprüche 16, 82 und 85,
**wobei** der Netzwerkserver ein POP Server ist.

93. Vorrichtung nach Anspruch 1,
wobei das Drehradmenü so gebildet ist, daß es um eine im wesentlichen horizontale Achse dreht.

94. Vorrichtung nach Anspruch 1,
**wobei** das Drehradmenü so gebildet ist, daß es im wesentlichen vertikal gedreht wird.

95. Vorrichtung nach Anspruch 1,
**wobei** die Folge von Flächen des Drehradmenüs so gebildet ist, daß sie in das Drehradmenü eingehängt erscheinen.

96. Vorrichtung nach Anspruch 1,
**wobei** jede der Folgen von auf dem Display sichtbaren Flächen darauf alphanumerische Symbole aufweist, die den über die Auswahl der Fläche erreichbaren Kanal darstellen, und wobei die alphanumerischen Symbole auf jeder Folge von auf dem Display sichtbaren Flächen vollständig angezeigt werden und hierauf lesbar sind.

97. Verfahren zur ausgewählten Darstellung von Internetinhalten und Fernsehprogrammen auf einem Display mit:

Einrichten einer Verbindung zwischen einem Client und einem Server zum Herunterladen von Daten von dem Server über eine Datenverbindung zu dem Client,
Darstellen einer Internet-Gatewayschnittstelle auf dem Display, die aktiv durch Links zu ausgewählten Webseiten blättert, die nach entsprechenden Bildschemas angeordnet sind, die dem Webseiteninhalt entsprechen, der auf Internet-Inhaltskanälen dargestellt ist, das ein Blättern durch einen ersten Satz ausgewählter Themen, einen zweiten Satz Links, die zu jedem der ausgewählten Themen zugehörig sind, umfaßt sowie ein Darstellen eines Drehradmenüs, wobei das Drehradmenü eine Abfolge von Feldern aufweist, die scheinbar einen dreidimensionalen Raum einnehmen, der auch den sich hinter das Display erstreckenden umfasst, wobei die Flächen auf der Vorderseite des Drehradmenüs auf dem Display sichtbar sind und der Abstand zwischen angrenzenden Flächen abnimmt und diese gegebenenfalls überlappen zu Zenit und Fußpunkt des Drehrades hin, wobei die äußeren auf dem Display dargestellten Flächen sich scheinbar hinter die anderen dargestellten Flächen bewegen, um eine einzige einheitliche Schnittstelle bereitzustellen und dadurch dem Nutzer ein Auswählen unter den Internetseitenkanälen und Fernsehstationskanälen zu ermöglichen,
Wählen zwischen Kanälen, die einzeln einen individuellen Fernsehinhalt und individuellen Internetinhalt darstellen und
Zugreifen auf den ausgewählten Kanalinhalt,

wobei der Client, wenn ein individueller Fernsehinhaltskanal oder ein individueller Internetinhaltskanal gewählt ist, den dem gewählten Kanal zugehörigen Inhalt auf dem Display darstellt.

**Revendications**

1. Système permettant d'afficher de façon sélective un contenu de l'Internet et une programmation de télévision sur un affichage, le système comprenant :

un client, qui dispose d'un affichage, et des canaux qui représentent de manière séparée un contenu de télévision individuel et un contenu de l'Internet individuel ;
un moyen pour effectuer une sélection entre les canaux et pour accéder au contenu de canal sélectionné, dans lequel, lorsqu'un canal de contenu de télévision individuel ou un canal de contenu de l'Internet individuel est sélectionné, le client présente le contenu qui est associé au canal respectif sur l'affichage ;
un moyen pour présenter sur l'affichage une interface de passerelle de l'Internet qui réalise de façon sélective un défilement au travers de liaisons sur des pages de la toile sélectionnées qui sont organisées conformément à des gabarits qui correspondent à un contenu de page de la toile qui est affiché sur des canaux de contenu de l'Internet comprenant une interface dynamique incluant un moyen pour réaliser un défilement sur des sujets sélectionnés d'un premier jeu, des liaisons d'un second jeu comme associé à chaque sujet sélectionné et des objets associés à chaque liaison ;
un serveur, qui inclut un moyen pour établir une connexion de données avec le client et pour décharger des données le long de la connexion de données sur le client ; et
un menu pour constituer une unique interface uniforme afin de permettre à l'utilisateur de naviguer entre les canaux de sites de l'Internet et de stations de télévision, comprenant un menu en roue tournante, dans lequel le menu en roue tournante comprend une série de panneaux qui apparaissent de manière à occuper un espace tridimensionnel incluant une extension derrière l'affichage, dans lequel les panneaux sur le côté avant du menu en roue tournante peuvent être visualisés sur l'affichage et la distance entre des panneaux adjacents diminue et réalise éventuellement un chevauchement en direction du zénith et du nadir de la roue tournante, et ainsi, les panneaux extrêmes qui sont affichés sur l'affichage apparaissent comme se déplaçant derrière d'autres panneaux affichés.

2. Système selon la revendication 1, dans lequel le serveur inclut un moyen pour filtrer de façon passive des pages de la toile sélectionnées pour qu'un utilisateur réalise une exploration sur la base de l'utilisation passée d'utilisateur du client.

**3.** Système selon la revendication 2, dans lequel le moyen de filtrage modifie les liaisons sur des sujets sélectionnés qui sont présents dans les gabarits en surveillant l'utilisation d'utilisateur du client afin de déterminer les préférences d'utilisateur pour les sujets sélectionnés dans les gabarits.

**4.** Système selon la revendication 1, dans lequel le serveur inclut un moyen pour interroger le client en ce qui concerne ses connexions de données disponibles afin de déterminer la délivrance la plus efficiente de différents types de données par l'intermédiaire de toutes les connexions de bandes passantes disponibles.

**5.** Système selon l'une quelconque des revendications précédentes, dans lequel le client inclut une entrée vidéo, au moins une ligne de communication de données et un support de stockage numérique, le client pouvant afficher de l'information vidéo à partir de l'entrée vidéo et des données à partir du support de stockage numérique sur l'affichage, le serveur étant connecté au client par la ligne de communication, le serveur pouvant réaliser une communication avec une pluralité d'autres serveurs, dans lequel le serveur et le client peuvent communiquer l'un avec l'autre de telle sorte que des documents en provenance des autres serveurs puissent être fournis au client et puissent être stockés sur le dispositif de stockage numérique, et le serveur incluant en outre une base de données qui catégorise un certain nombre de documents en provenance des autres serveurs selon des sujets dignes d'intérêt conformément à des critères présélectionnés.

**6.** Système selon l'une quelconque des revendications précédentes, dans lequel le client inclut un boîtier annexe, qui est connecté à l'affichage, pour réaliser des connexions sur des sources de vidéo et de données d'ordinateur destinées à être traitées et à être affichées sur l'affichage.

**7.** Système selon l'une quelconque des revendications précédentes, dans lequel l'affichage comprend un écran de télévision.

**8.** Système selon l'une quelconque des revendications précédentes, dans lequel une connexion de données entre le client et le serveur inclut un modem de téléphone.

**9.** Système l'une quelconque des revendications précédentes, dans lequel le client inclut en outre un processeur pour réaliser des tâches multimédia, pour réaliser une programmation pour la toile de l'Internet, pour réaliser une navigation et pour commander des tâches multimédia.

**10.** Système selon l'une quelconque des revendications précédentes, dans lequel le client inclut en outre un dispositif de commande à distance ou de télécommande.

**11.** Système selon l'une quelconque des revendications précédentes, comprenant en outre un moyen pour entrer du texte de façon alphanumérique.

**12.** Système selon l'une quelconque des revendications précédentes, dans lequel la connexion de données sur le client comprend un service par satellite permettant de délivrer une programmation de télévision et permettant de délivrer un contenu de l'Internet pendant le signal de suppression de programmation de télévision.

**13.** Système l'une quelconque des revendications précédentes, dans lequel la connexion de données comprend une connexion ISDN.

**14.** Système selon l'une quelconque des revendications précédentes, dans lequel la connexion de données comprend un service de données par satellite numérique.

**15.** Système selon l'une quelconque des revendications précédentes, dans lequel la connexion de données comprend un modem par câble.

**16.** Système selon l'une quelconque des revendications précédentes, dans lequel le serveur comprend un serveur par réseau pour permettre au client d'accéder à l'Internet de telle sorte que le client puisse demander en requête une information à partir d'autres serveurs qui sont connectés à l'Internet.

**17.** Système selon l'une quelconque des revendications précédentes, dans lequel le client comprend en outre une interface utilisateur graphique et le serveur inclut un moyen pour fournir à l'interface utilisateur graphique une page avec des liaisons sur un contenu de l'Internet.

**18.** Système selon l'une quelconque des revendications précédentes, dans lequel les canaux de l'Internet représentent un URL sur un serveur particulier.

**19.** Systèmes selon l'une quelconque des revendications précédentes, dans lequel les gabarits catégorisent et organisent les liaisons.

**20.** Système selon la revendication 1 ou la revendication 2, comprenant en outre une pluralité de menus dédiés, chacun pour une fonction de commande différente incluant une pluralité de commandes personnalisées différentes.

21. Système l'une quelconque des revendications précédentes, comprenant en outre un moyen pour démultiplexer des données pour le client, lequel comprend un moyen pour décharger des fichiers graphiques, de son ou de vidéo sur une connexion de données de bande passante importante.

22. Système selon l'une quelconque des revendications précédentes, comprenant en outre un moyen pour synchroniser une décompression de différents types de fichiers de données pour une présentation simultanée et coordonnée à l'utilisateur.

23. Système selon la revendication 5, dans lequel le support de stockage numérique comprend une unité de disque dur.

24. Système selon la revendication 5, dans lequel le support de stockage de données numérique comprend un disque vidéo numérique.

25. Système selon la revendication 5, dans lequel le support de stockage numérique comprend une bande vidéo numérique.

26. Système selon la revendication 7, dans lequel l'écran de télévision comprend un tube à rayons cathodiques.

27. Système selon la revendication 7, dans lequel l'écran de télévision comprend un affichage à cristaux liquides.

28. Système selon la revendication 10, dans lequel le dispositif de commande à distance ou de télécommande inclut des touches numériques pour sélectionner des canaux.

29. Système selon la revendication 10, dans lequel le dispositif de commande à distance ou de télécommande inclut des commandes directionnelles pour commander le déplacement d'un moyen de sélection sur l'écran de télévision.

30. Système selon la revendication 10, dans lequel le dispositif de commande à distance ou de télécommande inclut un bouton pour activer une liaison ou une commande.

31. Système selon la revendication 10, dans lequel le dispositif de commande à distance ou de télécommande inclut des touches dédiées pour sauter jusqu'à une fonction spécialisée.

32. Système selon la revendication 11, dans lequel le moyen d'entrée comprend un clavier.

33. Système selon la revendication 12 ou 21, dans lequel la connexion vidéo comprend une connexion de diffusion par satellite numérique.

34. Système selon la revendication 12 ou 21, dans lequel la connexion vidéo comprend une connexion par câble.

35. Système selon l'une quelconque des revendications précédentes, dans lequel les gabarits incluent des liaisons qui sont classifiées selon des catégories, lesquels gabarits constituent un contexte pour présenter les liaisons dans l'interface utilisateur graphique de client.

36. Système selon la revendication 1, dans lequel le menu inclut en outre un canal séparé pour une page de guidage qui comporte des liaisons sur des URL.

37. Système selon la revendication 1, dans lequel le menu recouvre l'écran de manière à permettre qu'une programmation vidéo ou de télévision se poursuive dans l'arrière-plan sur l'affichage.

38. Système selon la revendication 19, comprenant en outre un moyen pour modifier les liaisons sur des sujets sélectionnés présents dans les gabarits en surveillant l'utilisation d'utilisateur du client afin de déterminer les préférences d'utilisateur pour les sujets sélectionnés dans les gabarits.

39. Système selon la revendication 20, dans lequel une fonction de menu dédiée comprend une navigation sur la toile.

40. Système selon la revendication 20, dans lequel une fonction de menu dédiée comprend l'envoi de courrier électronique.

41. Système selon la revendication 20, dans lequel une fonction de menu dédiée comprend la lecture de courrier électronique.

42. Système selon la revendication 20, dans lequel une fonction de menu dédiée comprend la recherche de courrier électronique.

43. Système selon la revendication 35, dans lequel les gabarits sont stockés sur le serveur.

44. Système selon la revendication 35, dans lequel les gabarits sont stockés sur le client.

45. Système selon la revendication 35, dans lequel les gabarits sont stockés sur le serveur et sur le client.

46. Système selon la revendication 35, dans lequel les gabarits incluent une pluralité de différentes catégories, incluant un contenu de page de la toile défini par des attributs d'identification prédéterminés qui identifient des aspects de la matière du contenu de page de la toile.

47. Système selon la revendication 35, comprenant en outre une interface utilisateur d'écran de télévision active qui inclut les gabarits.

48. Système selon la revendication 35, incluant une page de guidage qui comprend un gabarit qui inclut des liaisons sur différentes pages de la toile précatégorisées présélectionnées constituant un centre d'intérêt d'utilisateur.

49. Système selon la revendication 1, comprenant en outre un moyen pour faire tourner le menu en roue tournante afin de simuler un déplacement à l'intérieur d'un espace tridimensionnel, ce qui a pour effet que les panneaux visibles autres que le panneau le plus en avant sont derrière d'autres panneaux lorsque la roue est tournée.

50. Système selon la revendication 1, comprenant en outre un moyen pour sur-éclairer une boîte de sélection pour qu'un panneau souhaité soit tourné dedans.

51. Système selon la revendication 1 ou 45, comprenant en outre un dispositif de commande à distance ou de télécommande et un moyen sur le dispositif de commande à distance ou de télécommande pour permettre un déplacement des panneaux vers le haut et vers le bas.

52. Système selon la revendication 1, dans lequel le menu en roue tournante ressemble à une grande roue foraine, les panneaux restant face à l'utilisateur lorsque la roue est tournée.

53. Système selon la revendication 1, dans lequel le panneau devient davantage translucide ou transparent lorsque le panneau se déplace jusqu'au zénith et au nadir de la roue.

54. Système selon la revendication 48, dans lequel la page de guidage comprend un canal qui peut être sélectionné par l'utilisateur.

55. Système selon la revendication 48, dans lequel la page de guidage est en outre adaptée pour être modifiée de manière automatique.

56. Système selon la revendication 48 ou 55, dans lequel la page de guidage est stockée sur le serveur.

57. Système selon la revendication 48 ou 55, dans lequel la page de guidage est stockée sur le client.

58. Système selon la revendication 48 ou 55, dans lequel la page de guidage est stockée sur le client et sur le serveur.

59. Système selon la revendication 48, 54, 55, 56, 57 ou 58, dans lequel la page de guidage inclut un jeu de sujets et un jeu de liaisons associé à chaque sujet.

60. Système selon la revendication 48, 54, 55, 56, 57 ou 58, dans lequel la page de guidage comprend une interface dynamique pour réaliser un défilement sur des liaisons afin de fournir à l'utilisateur client un choix tournant de liaisons.

61. Système selon la revendication 51, comprenant en outre un moyen sur le dispositif de commande à distance ou de télécommande pour sélectionner le canal souhaité, qui est sur-éclairé dans la boîte de sélection.

62. Système selon la revendication 55, dans lequel une adaptation de page de guidage est basée en partie sur des habitudes de visualisation d'utilisateur passées.

63. Système selon la revendication 59, dans lequel les liaisons incluent un objet associé pour indiquer visuellement la matière de la liaison.

64. Système selon la revendication 59, dans lequel les sujets de page de guidage et les liaisons peuvent être sélectionnés selon une série de séquences.

65. Système selon la revendication 59, comprenant en outre un dispositif de commande à distance ou de télécommande pour sélectionner une liaison afin de délivrer le contenu de l'Internet au client pour un affichage sur l'écran de télévision.

66. Système selon la revendication 60, dans lequel la page de guidage inclut en outre des objets associés pour les liaisons qui défilent.

67. Système selon la revendication 63, dans lequel les objets associés sont affichés en tant que présentation sous forme attractive pour l'utilisateur.

68. Système selon la revendication 63, dans lequel les objets associés sont affichés en tant que présentation sous forme de bande de film pour l'utilisateur.

69. Système selon la revendication 64, dans lequel la série de séquences comprend un premier jeu de sujets sélectionnés affichés sur l'écran pour l'utilisateur client et un sous-jeu du premier jeu de sujets sur-éclairé de façon sélective selon un premier ordre séquentiel.

**70.** Système selon la revendication 65, dans lequel le dispositif de commande à distance ou de télécommande inclut des boutons de sélection pour sélectionner une liaison sur-éclairée.

**71.** Système selon la revendication 65, dans lequel le dispositif de commande à distance ou de télécommande inclut un curseur pour sélectionner une liaison non sur-éclairée.

**72.** Système selon la revendication 66, comprenant en outre un moyen pour réaliser de façon active un défilement sur des trames afin de présenter de manière dynamique des sujets, des liaisons et des objets associés conformément à une structure de classification définie par gabarits.

**73.** Système selon la revendication 67, dans lequel la présentation sous forme attractive comprend un moyen attractif se déplaçant latéralement de façon dynamique de liaisons présentées simultanément et d'objets associés pour une pluralité de sujets.

**74.** Système selon la revendication 64, 69 ou 70, dans lequel chaque sujet affiché suivant est sur-éclairé selon l'ordre descendant et la séquence commence à nouveau au premier jeu de sujets.

**75.** Système selon la revendication 69, comprenant en outre un second jeu de liaisons de l'Internet qui est associé au premier jeu de sujets.

**76.** Système selon la revendication 70, dans lequel, suite au sur-éclairage d'une liaison, un objet qui est associé à la liaison sur-éclairée est affiché sur l'écran de télévision.

**77.** Système selon la revendication 75, dans lequel le second jeu de liaisons de l'Internet est sur-éclairé selon un second ordre séquentiel.

**78.** Système selon la revendication 76, dans lequel l'objet comprend une image graphique.

**79.** Système selon la revendication 76, dans lequel l'objet comprend une animation.

**80.** Système selon la revendication 76, dans lequel l'objet comprend un fichier de son.

**81.** Système selon la revendication 76, dans lequel l'objet est stocké sur le client.

**82.** Système selon la revendication 76, dans lequel l'objet est stocké sur un serveur de réseau.

**83.** Système selon la revendication 76, dans lequel l'objet est stocké sur le serveur qui contient l'URL pour la liaison sur-éclairée.

**84.** Système selon la revendication 76, comprenant en outre un moyen pour permettre le déchargement de l'objet associé depuis le serveur lorsque la liaison est sur-éclairée en premier.

**85.** Système selon la revendication 82, comprenant en outre un moyen pour établir une connexion avec le serveur de réseau après qu'une liaison est sélectionnée par l'utilisateur et tandis que la page de la toile déchargée au préalable est en train d'être visualisée, afin de suivre des liaisons qui sont présentes dans la page de la toile et afin de décharger d'autres pages de la toile rapportées concernant les centres d'intérêt de l'utilisateur.

**86.** Système selon la revendication 21 ou 84, dans lequel le moyen d'autorisation de déchargement comprend une connexion de données à bande passante importante haute vitesse.

**87.** Système selon la revendication 84, comprenant en outre un moyen pour permettre le déchargement de l'objet associé de façon périodique pour le client et pour permettre sa sauvegarde sur le support de stockage numérique pendant des heures de faible utilisation hors heures de pointe.

**88.** Système selon la revendication 84, dans lequel le moyen de validation ou d'autorisation de déchargement met à jour en outre de manière automatique des pages de al toile qui constituent une partie de sites de la toile visités fréquemment.

**89.** Système selon la revendication 84, comprenant en outre un moyen pour fournir à l'utilisateur une interface utilisateur substantiellement rapide.

**90.** Système selon la revendication 85, dans lequel la connexion de données comprend une connexion par satellite numérique.

**91.** Système selon la revendication 87, comprenant en outre un moyen pour initier une connexion par composition de numéro de téléphone sur le serveur de réseau lorsque l'utilisateur sélectionne initialement la page de guidage.

**92.** Système selon l'une quelconque des revendications 16, 82 et 85, dans lequel le serveur de réseau est un serveur POP.

**93.** Système selon la revendication 1, dans lequel le menu en roue tournante est adapté pour tourner autour d'un axe sensiblement horizontal.

**94.** Système selon la revendication 1, dans lequel le menu en roue tournante est adapté pour être tourné sensiblement verticalement.

**95.** Système selon la revendication 1, dans lequel la série de panneaux du menu en roue tournante est adaptée pour apparaître comme étant suspendue à partir du menu en roue tournante.

**96.** Système selon la revendication 1, dans lequel chacun de la série de panneaux visibles dans l'affichage inclut des symboles alphanumériques dessus représentant le canal qui est accessible par l'intermédiaire d'une sélection du panneau et dans lequel le symbole alphanumérique sur chacun de la série de panneaux visibles dans l'affichage est complètement affiché et peut être lu complètement dedans.

**97.** Procédé permettant d'afficher de façon sélective un contenu de l'Internet et une programmation de télévision sur un affichage, comprenant :

l'établissement d'une connexion entre un client et un serveur pour décharger des données depuis le serveur le long d'une connexion de données sur le client ;

l'affichage d'une interface de passerelle de l'Internet qui réalise de façon active un défilement sur des liaisons jusqu'à des pages de la toile sélectionnées qui sont organisées conformément à des gabarits qui correspondent à un contenu de page de la toile qui est affiché sur des canaux de contenu de l'Internet incluant un défilement sur des sujets sélectionnés d'un premier jeu, des liaisons d'un second jeu associé à chaque sujet sélectionné et des objets associés à chaque liaison, comprenant l'affichage d'un menu en roue tournante qui comprend une série de panneaux qui apparaissent comme occupant un espace tridimensionnel incluant une extension derrière l'affichage, dans lequel les panneaux sur le côté avant du menu en roue tournante peuvent être visualisés sur l'affichage et la distance entre les panneaux adjacents diminue et éventuellement réalise un chevauchement en direction du zénith ou du nadir de la roue tournante, et les panneaux extrêmes qui sont affichés sur l'affichage apparaissent comme se déplaçant derrière d'autres panneaux affichés pour constituer une unique interface uniforme pour permettre à l'utilisateur de naviguer entre les canaux de sites de l'Internet et de stations de télévision ;

la sélection entre des canaux représentant de façon séparée un contenu de télévision individuel et un contenu de l'Internet individuel, au niveau du client qui dispose d'un affichage ;

l'accès au contenu de canal sélectionné,

dans lequel, lorsqu'un canal de contenu de télévision individuel ou un canal de contenu de l'Internet individuel est sélectionné, le client présente le contenu associé au canal sélectionné sur l'affichage.

FIG. 1

EP 0 986 901 B1

FIG. 2

TEMPLATE I

$$\frac{1}{\alpha} \quad \frac{2}{\beta} \quad \frac{3}{\gamma}$$

$$\alpha$$

TEMPLATE II

$$\frac{1}{\alpha} \quad \frac{3}{\gamma} \quad \frac{4}{\gamma}$$

$$\alpha \quad \Delta$$

FIG. 3

DOCUMENT

TOPICS

$$\alpha \quad \beta$$

$$1 \quad \cup \quad 2$$

$$\beta$$

$$2$$

$$\alpha \quad \gamma$$
$$\Delta$$

$$1 \quad \cup \quad 3 \quad \cup \quad 4$$

FIG. 4

## FIG. 5

GUIDE PAGE

1
2
3

2(3)A

2(1)
2(2)
2(3)
2(4)
2(5)

## FIG. 7

GUIDE PAGE

| | | | | |
|---|---|---|---|---|
| ① | | | | |
| ② | | | | |
| ③ | | | | |
| 4 | | | | |
| 5 | | | | |
| 6 | | | | |

| | | | | |
|---|---|---|---|---|
| 1 | 1(1)A | 1(2)A | | 1(3)A |
| 2 | 2(1)A | 2(2)A | 2(3)A | 2(4)A |
| 3 | 3(2)A | 3(3)A | | 3(4)A |

FIG. 6

FIG. 8

FIG. 9

# FIG. 10

GENERAL PROFILE/TEMPLATE
IS SELECTED FOR USER

↓

MONITOR USER SELECTIONS

↓

RECORD TOPIC ATTRIBUTES
ASSOCIATED WITH THE
USER'S SELECTIONS

↓

DETERMINE TOPICS OF
INTEREST TO THE USER
BASED ON THE TOPIC
ATTRIBUTES ASSOCIATED
WITH PAST USER
SELECTIONS

↓

MODIFY SELECTED PROFILE/TEMPLATE
TO REFLECT THE DETERMINED
TOPICS OF INTEREST

↓

PRESENT LINKS TO WEB PAGES
IN THE SELECTED PROFILE/TEMPLATE
HAVING TOPIC ATTRIBUTES
CONSISTENT WITH THE
DETERMINED TOPICS OF INTEREST

FIG. 11

# FIG. 12

```
┌─────────────────────────────┐
│   QUERY CLIENT RE AVAILABLE  │
│ DATA CONNECTIONS (ISDN, DBS, ETC.) │
└─────────────────────────────┘
              │
              ▼
┌─────────────────────────────┐
│  DETERMINE USAGE COSTS AND   │
│ BANDWIDTH AVAILABLE FOR DATA │
└─────────────────────────────┘
              │
              ▼
┌─────────────────────────────┐
│   DIVIDING DATA FOR DELIVERY  │
│  ACCORDING TO DATA FILE TYPE  │
│ (TEXT, GRAPHICS, AUDIO, VIDEO, ETC.) │
└─────────────────────────────┘
              │
              ▼
┌─────────────────────────────┐
│  DELIVER DATA EFFICIENTLY OVER │
│ ALL AVAILABLE DATA CONNECTIONS │
│  ACCORDING TO BANDWIDTH NEEDS  │
│  OF DIVIDED OUT DATA FILES AND │
│          USAGE COSTS           │
└─────────────────────────────┘
              │
              ▼
┌─────────────────────────────┐
│ DEMULTIPLEXING DATA ARRIVING  │
│ OVER THE DIFFERENT DATA CONNECTIONS │
└─────────────────────────────┘
              │
              ▼
┌─────────────────────────────┐
│ SYNCHRONIZING DATA FILES (E.G., │
│ SOUND AND ANIMATION) FOR DISPLAY │
│ AND PRESENTATION TO CLIENT USER │
└─────────────────────────────┘
```